(19)

**Europäisches Patentamt**
**European Patent Office**
**Office européen des brevets**

(11) **EP 4 503 486 B1**

(12) **EUROPEAN PATENT SPECIFICATION**

(45) Date of publication and mention
of the grant of the patent:
**29.10.2025 Bulletin 2025/44**

(21) Application number: **22939267.5**

(22) Date of filing: **29.04.2022**

(51) International Patent Classification (IPC):
***H04L 1/08*** (2006.01)     ***H04L 5/00*** (2006.01)

(52) Cooperative Patent Classification (CPC):
**H04W 74/0833; H04L 1/0009; H04L 1/08;**
**H04L 5/0044; H04L 5/0053; H04W 76/27;**
**H04L 1/0025**

(86) International application number:
**PCT/CN2022/090466**

(87) International publication number:
**WO 2023/206419 (02.11.2023 Gazette 2023/44)**

(54) **WIRELESS COMMUNICATION METHODS, TERMINAL DEVICES, AND NETWORK DEVICES**

DRAHTLOSKOMMUNIKATIONSVERFAHREN, ENDGERÄTEVORRICHTUNGEN UND
NETZWERKVORRICHTUNGEN

PROCÉDÉS DE COMMUNICATION SANS FIL, DISPOSITIFS TERMINAUX ET DISPOSITIFS DE
RÉSEAU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**05.02.2025 Bulletin 2025/06**

(73) Proprietor: **GUANGDONG OPPO MOBILE
TELECOMMUNICATIONS
CORP., LTD.
Dongguan, Guangdong 523860 (CN)**

(72) Inventor: **ZHAO, Nande
Dongguan, Guangdong 523860 (CN)**

(74) Representative: **RGTH
Patentanwälte PartGmbB
Neuer Wall 10
20354 Hamburg (DE)**

(56) References cited:
**WO-A1-2015/188513     WO-A1-2022/039959
CN-A- 112 262 609     CN-A- 112 449 419
US-A1- 2019 045 552     US-A1- 2019 182 824
US-A1- 2021 126 742     US-A1- 2021 392 679
US-A1- 2022 006 575**

Note: Within nine months of the publication of the mention of the grant of the European patent in the European Patent
Bulletin, any person may give notice to the European Patent Office of opposition to that patent, in accordance with the
Implementing Regulations. Notice of opposition shall not be deemed to have been filed until the opposition fee has been
paid. (Art. 99(1) European Patent Convention).

Description

## TECHNICAL FIELD

Embodiments of this application relate to the communication field, and more specifically, to a wireless communication method, a terminal device, and a network device.

## BACKGROUND

At present, a user equipment (User Equipment, UE) supports a repetition of transmission of only a message 3 (Msg3) physical uplink shared channel (Physical Uplink Shared Channel, PUSCH) in an initial access phase. In a communication scenario in which coverage performance is limited, for example, in a non-terrestrial network (Non-Terrestrial Network, NTN) system, a current transmission mechanism for an initial access phase may fail to successfully transmit a physical uplink control channel (Physical Uplink Control Channel, PUCCH) for the initial access phase, which leads to an initial access failure of the UE, and reduces coverage performance. US2019/045552A1 provides a terminal for a radio access network, the terminal being adapted for transmitting Uplink Control Information, UCI. Transmitting UCI comprises repeating the UCI for a number of repetitions, the number of repetitions being determined based on a Random Access CHannel Coverage Enhancement Level, PRACH CE level.

## SUMMARY

Embodiments of this application provide a wireless communication method, a terminal device, and a network device, which can improve an initial access success rate and coverage performance. The invention is as defined in the appended set of claims.

## BRIEF DESCRIPTION OF DRAWINGS

FIG. 1 to FIG. 3 are schematic block diagrams of a system architecture according to an embodiment of this application.
FIG. 4 and FIG. 5 illustrate schematic diagrams of NTN scenarios based on a transparent payload satellite and a regenerative payload satellite, respectively.
FIG. 6 is a schematic flowchart of a contention-based random access procedure according to an embodiment of this application.
FIG. 7 is a schematic flowchart of a wireless communication method, executed by a terminal device, according to an embodiment of this application.
FIG. 8 is a schematic diagram of at least one first nominal TDW according to an embodiment of this application.
FIG. 9 and FIG. 10 are schematic diagrams of a relationship between at least one first nominal TDW and a frequency hopping interval according to an embodiment of this application.
FIG. 11 is another schematic flowchart of a wireless communication method, executed by a terminal device, according to an embodiment of this application.
FIG. 12 is a schematic diagram of at least one second nominal TDW according to an embodiment of this application.
FIG. 13 and FIG. 14 are schematic diagrams of a relationship between at least one second nominal TDW and a frequency hopping interval according to an embodiment of this application.
FIG. 15 is a schematic flowchart of a wireless communication method, executed by a network device, according to an embodiment of this application.
FIG. 16 is another schematic flowchart of a wireless communication method, executed by a network device, according to an embodiment of this application.
FIG. 17 and FIG. 18 are schematic block diagrams of a terminal device according to an embodiment of this application.
FIG. 19 and FIG. 20 are schematic block diagrams of a network device according to an embodiment of this application.
FIG. 21 is a schematic block diagram of a communications device according to an embodiment of this application.
FIG. 22 is a schematic block diagram of a chip according to an embodiment of this application.

## DESCRIPTION OF EMBODIMENTS

The following describes the technical solutions in embodiments of this application with reference to the accompanying drawings in embodiments of this application. Apparently, the described embodiments are some rather than all of embodiments of this application. All other embodiments obtained by persons of ordinary skill in the art based on embodiments of this application without creative efforts fall within the protection scope of this application.

It should be noted that the term "indication" may be a direct indication, an indirect indication, or an association relationship. For example, if A indicates B, it may mean that A directly indicates B, for example, B may be obtained from A. Alternatively, it may mean that A indicates B indirectly, for example, A indicates C, and B may be obtained from C. Alternatively, it may mean that there is an association relationship between A and B. In addition, the description "when" in embodiments of this application may be interpreted as "if", or "in a case that", or "while", or "in response to". Similarly, depending on context, the phrase "if it is determined" or "if it is detected (the stated condition or event)" may be interpreted as "when it is determined" or "in response to determining" or "when it is detected (the stated condition or event)" or "in response to detecting (the stated condition or event)".

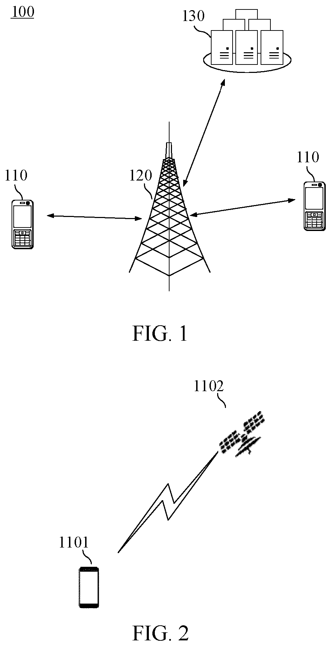

FIG. 1 is a schematic diagram of an application scenario according to an embodiment of this application.

As shown in FIG. 1, a communications system 100 may include terminal devices 110 and a network device 120. The network device 120 may communicate with the terminal devices 110 by using air interfaces. Multi-service transmission is supported between the terminal devices 110 and the network device 120.

It should be understood that the communications system 100 is merely used as an example for description in embodiments of this application, but the embodiments of this application are not limited thereto. In other words, the technical solutions in embodiments of this application may be applied to various communications systems, for example, a long term evolution (Long Term Evolution, LTE) system, an LTE time division duplex (Time Division Duplex, TDD) system, a universal mobile telecommunications system (Universal Mobile Telecommunication System, UMTS), a 5G communications system (also referred to as a new radio (New Radio, NR) communications system), or a future communications system.

In the communications system 100 shown in FIG. 1, the network device 120 may be an access network device that communicates with the terminal devices 110. The access network device may provide communication coverage for a specific geographical area, and may communicate with a terminal device 110 (such as a UE) located in the coverage area.

The network device 120 may be an evolved NodeB (Evolutional Node B, eNB or eNodeB) in a long term evolution (Long Term Evolution, LTE) system, or a next generation radio access network (Next Generation Radio Access Network, NG RAN) device, or a gNB (gNB) in an NR system, or a wireless controller in a cloud radio access network (Cloud Radio Access Network, CRAN), or the network device 120 may be a relay station, an access point, a vehicle-mounted device, a wearable device, a hub, a switch, a bridge, a router, a network device in a future evolved public land mobile network (Public Land Mobile Network, PLMN), or the like.

The terminal device 110 may be any terminal device, which includes but is not limited to a terminal device that is connected to the network device 120 or another terminal device by using a wired or wireless connection.

For example, the terminal device 110 may be an access terminal, a user equipment (User Equipment, UE), a subscriber unit, a subscriber station, a mobile station, a mobile console, a remote station, a remote terminal, a mobile device, a user terminal, a terminal, a wireless communications device, a user agent, or a user apparatus. The access terminal may be a cellular phone, a cordless phone, a session initiation protocol (Session Initiation Protocol, SIP) phone, a wireless local loop (Wireless Local Loop, WLL) station, a personal digital assistant (Personal Digital Assistant, PDA), a handheld device with a wireless communication function, a computing device, another processing device connected to a wireless modem, a vehicle-mounted device, a wearable device, a terminal device in a 5G network, a terminal device in a future evolved network, or the like.

The terminal device 110 may be configured for device-to-device (Device to Device, D2D) communication.

The wireless communications system 100 may further include a core network device 130 that communicates with a base station. The core network device 130 may be a 5G core network (5G Core, 5GC) device, for example, an access and mobility management function (Access and Mobility Management Function, AMF), for another example, an authentication server function (Authentication Server Function, AUSF), for another example, a user plane function (User Plane Function, UPF), or for another example, a session management function (Session Management Function, SMF). Optionally, the core network device 130 may alternatively be an evolved packet core (Evolved Packet Core, EPC) device of an LTE network, for example, a session management function + core packet gateway (Session Management Function + Core Packet Gateway, SMF+PGW-C) device. It should be understood that the SMF+PGW-C may implement both a function that can be implemented by an SMF and a function that can be implemented by a PGW-C. In a network evolution process, the foregoing core network device may also be called another name, or a new network entity may be formed by dividing a function of the core network, which is not limited in embodiments of this application.

Communication between functional units in the communications system 100 may be further implemented by establishing a connection by using a next generation (next generation, NG) interface.

For example, the terminal device establishes an air interface connection to an access network device by using an NR interface, to transmit user plane data and control plane signalling. The terminal device may establish a control plane signalling connection to an AMF by using an NG interface 1 (N1 for short). The access network device, for example, a next-generation radio access base station (gNB), may establish a user plane data connection to a UPF by using an NG interface 3 (N3 for short). The access network device may establish a control plane signalling connection to the AMF by using an NG interface 2 (N2 for short). The UPF may establish a control plane signalling connection to an SMF by using an NG interface 4 (N4 for short). The UPF may exchange user plane data with a data network by using an NG interface 6 (N6 for short). The AMF may establish a control plane signalling connection to the SMF by using an NG interface 11 (N11 for short). The SMF may establish a control plane signalling connection to a PCF by using an NG interface 7 (N7 for short).

FIG. 1 exemplarily shows a base station, a core network device, and two terminal devices. Optionally, the wireless communications system 100 may include a plurality of base station devices, and a coverage area of each base station may include another quantity of terminal devices. This is not limited in embodiments of this application.

In a new radio (New Radio, NR) system, it is considered that a non-terrestrial network (Non-Terrestrial Networks, NTN) is used for providing communication services to a user. An NTN generally provides communication services to terrestrial users through satellite communication. Satellite communication has many unique advantages over terrestrial cellular network communication. First, satellite communication is not limited by a geographic location of a user. For example, general terrestrial communication cannot cover an area such as an ocean, a mountain, or a desert in which a communications device cannot be set up or no communication coverage is provided due to sparse population. However, for satellite communication, since a satellite may cover a relatively large terrestrial area, and the satellite may orbit the earth, theoretically, every corner of the earth may be covered by satellite communication. Second, satellite communication has great social value. Satellite communication may cover remote mountainous areas, and impoverished countries or regions at relatively low costs, thereby enabling people in these regions to enjoy advanced voice communication and mobile internet technologies, which helps narrow a digital divide with developed regions and promote development of these regions. Third, satellite communication allows for a long distance, and an increase in a communication distance does not significantly increase communication costs. Finally, satellite communication has high stability, and is not limited by natural disasters.

FIG. 2 is a schematic diagram of an architecture of another communications system according to an embodiment of this application.

As shown in FIG. 2, a terminal device 1101 and a satellite 1102 are included, and wireless communication may be performed between the terminal device 1101 and the satellite 1102. A network formed between the terminal device 1101 and the satellite 1102 may also be referred to as an NTN. In the architecture of the communications system shown in FIG. 2, the satellite 1102 may have a function of a base station, and direct communication may be performed between the terminal device 1101 and the satellite 1102. According to such a system architecture, the satellite 1102 may be referred to as a network device. In some embodiments of this application, the communications system may include a plurality of network devices 1102, and another quantity of terminal devices may be included within a coverage range of each network device 1102, which is not limited in embodiments of this application.

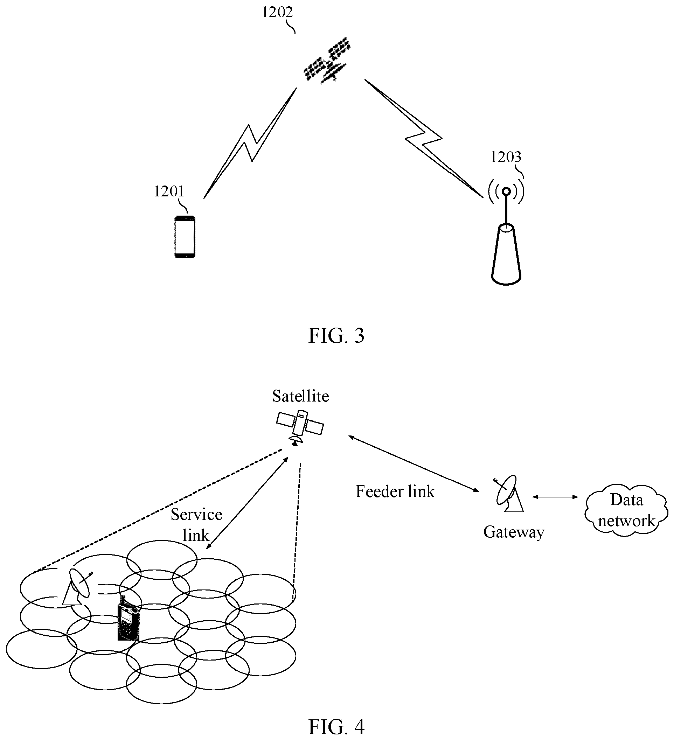

FIG. 3 is a schematic diagram of an architecture of another communications system according to an embodiment of this application.

As shown in FIG. 3, a terminal device 1201, a satellite 1202, and a base station 1203 are included, wireless communication may be performed between the terminal device 1201 and the satellite 1202, and communication may be performed between the satellite 1202 and the base station 1203. A network formed between the terminal device 1201, the satellite 1202, and the base station 1203 may also be referred to as an NTN. In the architecture of the communications system shown in FIG. 3, the satellite 1202 may not have a function of a base station, and communication between the terminal device 1201 and the base station 1203 needs to be relayed by using the satellite 1202. According to such a system architecture, the base station 1203 may be referred to as a network device. In some embodiments of this application, the communications system may include a plurality of network devices 1203, and another quantity of terminal devices may be included within a coverage range of each network device 1203, which is not limited in embodiments of this application. The network device 1203 may be the network device 120 in FIG. 1.

It should be understood that the satellite 1102 or the satellite 1202 includes but is not limited to: a low earth orbit (Low-Earth Orbit, LEO) satellite, a medium earth orbit (Medium-Earth Orbit, MEO) satellite, a geostationary earth orbit (Geostationary Earth Orbit, GEO) satellite, or a high elliptical orbit (High Elliptical Orbit, HEO) satellite. A satellite may use a plurality of beams to cover the ground. For example, one satellite may form dozens or even hundreds of beams to cover the ground. In other words, one satellite beam may cover a terrestrial area of tens to hundreds of kilometers in diameter, to ensure coverage of a satellite and improve system capacity of an entire satellite communications system.

As an example, an altitude of an LEO satellite may range from 500 km to 1,500 km, a corresponding orbital period may approximately range from 1.5 hours to 2 hours, a signal propagation delay of single-hop communication between users may be generally less than 20 ms, and a maximum satellite visibility time may be 20 minutes. The LEO satellite has a short signal propagation distance and a small link loss, and has a low requirement for transmit power of a user terminal. An orbital altitude of a GEO satellite may be 35,786 km, a period of rotation around the earth may be 24 hours, and a signal propagation delay of single-hop communication between users may be generally 250 ms.

Generally, to ensure satellite coverage and improve system capacity of an entire satellite communications system, a satellite uses a plurality of beams to cover the ground. One satellite may form dozens or even hundreds of beams to cover the ground. One satellite beam may cover a terrestrial area of tens to hundreds of kilometers in diameter.

It should be noted that FIG. 1 to FIG. 3 are only examples of a system to which this application is applicable. Certainly, the methods shown in embodiments of this application may be further applicable to another system. In addition, the terms "system" and "network" may often be used interchangeably in this specification. In this specification, the term "and/or" is merely an association relationship that describes associated objects, and represents that there may be three relationships. For example, A and/or B may represent three cases: only A exists, both A and B exist, and only B exists. In addition, the character "/" herein generally indicates an "or" relationship between the associated objects. It should be understood that, the "indication" mentioned in embodiments of this application may be a direct indication or an indirect indication, or indicate an association. For example, A indicates B, which may mean that A directly indicates B, for example, B may be obtained by means of A; or may mean that A indirectly indicates B, for example, A indicates C, and B may be obtained by means of C; or may mean that there is an association relationship between A and B.

Satellites may be classified into transparent payload (transparent payload) satellites and regenerative payload (regenerative payload) satellites based on functions they provide. The transparent payload satellite provides only functions such as radio frequency filtering, frequency conversion, and amplification, provides only transparent forwarding of signals, and does not change waveform signals forwarded by the satellite. The regenerative payload satellite, in addition to providing functions such as radio frequency filtering, frequency conversion, and amplification, also provides functions such as demodulation or decoding, routing or conversion, and encoding or modulation, and has some or all functions of a base station.

The NTN may include one or more gateways (Gateway) for communication between a satellite and a terminal.

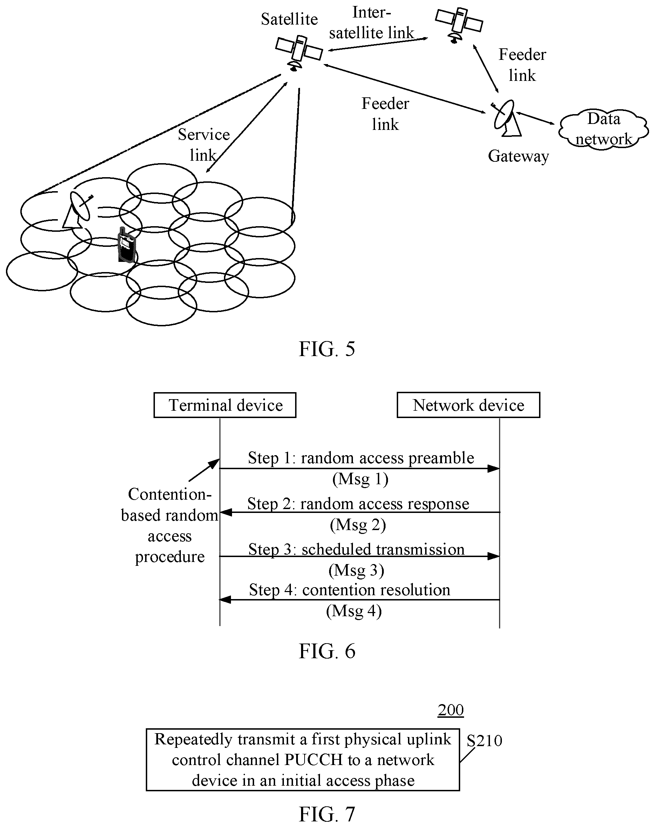

FIG. 4 and FIG. 5 illustrate schematic diagrams of NTN scenarios based on a transparent payload satellite and a regenerative payload satellite, respectively.

As shown in FIG. 4, for the NTN scenario based on a transparent payload satellite, a gateway communicates with the satellite by using a feeder link (Feeder link), and the satellite communicates with a terminal by using a service link (service link). As shown in FIG. 5, for the NTN scenario based on a regenerative payload satellite, satellites communicate with each other by using an inter-satellite link (InterStar link), a gateway communicates with the satellite by using a feeder link (Feeder link), and the satellite communicates with a terminal by using a service link (service link).

With people's pursuit of rate, delay, high-speed mobility, and energy efficiency, and in view of the diversity and complexity of services in future life, the international organization for standardization, 3GPP, has started developing 5G. Main application scenarios of 5G include: enhanced mobile broadband (Enhance Mobile Broadband, eMBB), ultra-reliable and low-latency communications (Ultra-Reliable and Low Latency Communication, URLLC), and massive machine type communication (massive machine type of communication, mMTC). eMBB aims to provide a user with access to multimedia content, services, and data, and the demand for eMBB is growing rapidly. Since eMBB may be deployed in different scenarios, such as indoor, urban, or rural areas, and its capabilities and requirements also vary greatly, EMBB cannot be generalized, and may be analyzed in detail in view of specific deployment scenarios. Typical applications of URLLC include industrial automation, electric power automation, remote medical operations (surgery), traffic safety guarantee, and the like. Typical characteristics of mMTC include high connection density, small data volume, delay-insensitive services, low cost and long service life of modules, and the like.

To facilitate understanding of the solutions provided in this application, related technical content of the solutions provided in this application are described below.

(1) Random access procedure

After a cell search process, a terminal device has implemented downlink synchronization with a cell, so that the terminal device can receive downlink data. However, the terminal device can perform uplink transmission only after implementing uplink synchronization with the cell. The terminal device may establish a connection to the cell and implement uplink synchronization with the cell through a random access procedure (Random Access Procedure, RAP). In other words, through a random access, the terminal device may implement uplink synchronization, and obtain a unique identity, that is, a cell radio network temporary identifier (Cell Radio Network Temporary Identity, C-RNTI), allocated by a network device to the terminal device. Therefore, the random access may be applied not only in an initial access, but also in a case in which uplink synchronization of a user is lost.

Optionally, the random access procedure in embodiments of this application may generally be triggered by one of following several trigger events:

(1) Initial access (initial access);
(2) Handover (handover);
(3) RRC connection re-establishment (RRC Connection Re-establishment);
(4) Downlink data arrival in an RRC connected state when an uplink synchronization status is "non-synchronized", in this case, after downlink data arrives, the terminal device needs to reply with an acknowledgement (Acknowledgement, ACK) or a negative acknowledgement (Negative Acknowledgement, NACK);

(5) Uplink data arrival in an RRC connected state when an uplink synchronization status is "non-synchronized";

(6) No physical uplink control channel (Physical Uplink Control Channel, PUCCH) resource available for scheduling request (Scheduling Request, SR) transmission in an RRC connected state, in this case, a terminal device that is already in an uplink synchronization state may be allowed to replace the function of the SR with a random access channel (Random Access Channel, RACH);

(7) Transition of a terminal device from an RRC inactive state (RRC_INACTIVE) to an RRC active state (RRC_ACTIVE);

(8) Request of a terminal device for other system information (Other System Information, OSI); and

(9) Beam failure recovery (beam failure recovery) of a terminal device.

A random access procedure mainly has two forms: contention-based random access (Contention Based Random Access, CBRA) and contention-free random access (Contention free Random Access, CFRA).

FIG. 6 is a process interaction diagram of a contention-based random access procedure.

The contention-based random access procedure is described below with reference to FIG. 6.

As shown in FIG. 6, the random access procedure may include following four steps:

Step 1: Msg 1.

The terminal device transmits the Msg 1 to a base station, so as to notify the network device that the terminal device initiates a random access request. The Msg 1 carries a random access preamble (Random Access Preamble, RAP), which is also referred to as a random access preamble sequence, a preamble sequence, a preamble, or the like. In addition, the Msg 1 may be further used for the network device to estimate a transmission delay between the network device and the terminal device, to calibrate an uplink time accordingly.

Specifically, the terminal device selects an index (index) of the preamble and a PRACH resource used for transmitting the preamble. Then, the terminal device transmits the selected preamble on the PRACH. The network device notifies, by broadcasting a system information block (System Information Block, SIB), for example, an SIB 2, all terminal devices on which time-frequency resources the terminal devices are allowed to transmit preambles.

Step 2: Msg 2.

After receiving the Msg 1 transmitted by the terminal device, the network device transmits, to the terminal device, a Msg 2, that is, a random access response (Random Access Response, RAR) message. The Msg 2 may carry, for example, a time advance (Time Advance, TA), an uplink grant instruction, for example, configuration of an uplink resource, and a temporary cell-radio network temporary identifier (Temporary Cell-Radio Network Temporary Identity, TC-RNTI).

The terminal device listens to a physical downlink control channel (Physical Downlink Control Channel, PDCCH) within a random access response time window (RAR window), to receive the RAR message that the network device responds with. The RAR message may be descrambled by using a corresponding random access radio network temporary identifier (Random Access Radio Network Temporary Identifier, RA-RNTI).

If the terminal device does not receive, within the RAR time window, the RAR message that the network device replies with, it is considered that the random access procedure fails.

If the terminal device successfully receives an RAR message, and a preamble index (preamble index) carried in the RAR message is the same as the index of the preamble transmitted by the terminal device by using the Msg 1, it is considered that the RAR is successfully received. In this case, the terminal device may stop listening within the RAR time window.

The Msg 2 may include RAR messages for a plurality of terminal devices, and the RAR message for each terminal device may include a random access preamble identity (RAP Identity, RAPID) used by the terminal device, information about a resource for transmitting a Msg 3, TA adjustment information, a TC-RNTI, or the like.

Step 3: Msg 3.

After receiving the RAR message, the terminal device determines whether the RAR message belongs to the terminal device. For example, the terminal device may check the RAR message by using a preamble identity. After the terminal device determines that the RAR message belongs to the terminal device, the terminal device generates the Msg 3 at an RRC layer, and transmits the Msg 3 to the network device. Identity information of the terminal device requires to be carried in the Msg 3.

Specifically, for different random access trigger events, the Msg 3 in step 3 of the four-step random access procedure may include different content, to perform scheduled transmission (Scheduled Transmission).

For example, for an initial access scenario, the Msg 3 may include an RRC connection request (RRC Connection Request) generated at an RRC layer, where the connection request carries at least non-access stratum (Non-Access Stratum, NAS) identity information of the terminal device, and may further carry, for example, a serving-temporary mobile subscriber identity (Serving-Temporary Mobile Subscriber Identity, S-TMSI) of the terminal device, a random number, or the like.

For another example, for a connection re-establishment scenario, the Msg 3 may include an RRC connection re-establishment request (RRC Connection Re-establishment Request) generated at the RRC layer and does not carry any NAS message, and may further carry, for example, a cell radio network temporary identifier (Cell Radio Network Temporary Identifier, C-RNTI) and protocol control information (Protocol Control Information, PCI).

For another example, for a handover scenario, the Msg 3 may include an RRC handover confirm (RRC Handover Confirm) message generated at the RRC layer and a C-RNTI of the terminal device, and may further carry, for example, a buffer status report (Buffer Status Report, BSR). For another scenario in which a trigger event is, for example, an uplink/downlink data arrival, the Msg 3 needs to include at least a C-RNTI of the terminal device.

Step 4: Msg 4.

The network device transmits the Msg 4 to the terminal device, and the terminal device correctly receives the Msg 4 to complete contention resolution (Contention Resolution). For example, in an RRC connection establishment process, the Msg 4 may carry an RRC connection establishment message.

The terminal device carries the unique identity of the terminal device in the Msg 3 in step 3, for example, the C-RNTI, or identity information (for example, an S-TMSI or a random number) from a core network. Therefore, in a contention resolution mechanism, the network device allows the unique identity of the terminal device to be carried in the Msg 4 to specify the terminal device that wins in the contention. Another terminal device that does not win in the contention resolution re-initiates a random access procedure.

It should be noted that when the terminal device needs to initiate a contention-based random access on a licensed spectrum (licensed band), because a plurality of terminal devices may be configured with common PRACH resources, the different terminal devices may compete for resources on a same PRACH resource.

While a resource conflict occurs, for example, a plurality of terminal devices select a same PRACH occasion (PRACH occasion), in this case, the network device may cause a backoff indicator (Backoff Indicator, BI) to be carried in the RAR message of the Msg 2. A terminal device for which a resource conflict occurs may generate a random number based on the backoff indicator, so that it may apply a delay based on the random number when a next PRACH resource arrives, and the Msg 1 is thus transmitted after the delay of a corresponding period of time, thereby reducing a probability of resource conflicts to some extent.

For an RACH triggered by an HO and a beam failure recovery (Beam failure recovery, BFR), the network may configure a dedicated RACH resource for a user, so that a UE may select to use a CF-RACH.

That the RACH is triggered by a BFR is used as an example. When selecting an RACH resource, the terminal device needs to first determine a measurement result of a synchronization signal block (Synchronization Signal Block, SSB) or a channel state information reference signal (Channel State Information Reference Signal, CSI-RS). For example, the terminal device determines whether there is an SSB or CSI-RS whose reference signal received power (Reference Signal Receiving Power, RSRP) meets a corresponding threshold. If there is an SSB or CSI-RS whose RSRP meets the threshold, the terminal device selects a preamble from preambles (preamble) corresponding to the SSB or the CSI-RS, to transmit a message 1 (Msg 1). In this case, the RACH is a contention-free random access (Contention free Random Access, CFRA). If there is no SSB or CSI-RS that meets the threshold, the terminal device selects an SSB randomly, and selects a preamble from preambles corresponding to the SSB, to transmit the Msg 1. In this case, the RACH is a contention-based random access (Contention Based Random Access, CBRA).

(2) Mechanism for a repetition of transmission of a Msg3 PUSCH

The mechanism for the repetition of transmission of the Msg3 PUSCH is as follows: The base station provides, for the UE in a common RACH configuration parameter *RACH-ConfigCommon*, a set of candidate number of repetition *numberOfMsg3Repetitions* for a repetition of PUSCH transmission scheduled by an RAR uplink grant or DCI 0_0 with CRC scrambled by a TC-RNTI, and the repetition of transmission of the Msg3 PUSCH is of a type A of the repetition of the PUSCH transmission.

The UE uses an RSRP result, obtained by measuring a downlink signal, as a reference for measuring uplink coverage performance. For example, a threshold for the repetition of transmission of the Msg3 PUSCH may be defined as $T_{Msg3}$. If an RSRP measurement result of a downlink path loss reference signal is less than $T_{Msg3}$, when transmitting the Msg1, the UE implicitly requests a repetition of transmission of the Msg3 PUSCH from the base station by selecting a specific PRACH resource, that is, a specific PRACH preamble set $U_1$.

If the UE requests a repetition of transmission of the Msg3 PUSCH, the UE repeatedly transmits the Msg3 PUSCH in K timeslots.

Determination of the number K of repetitions of transmission is as shown in Table 1. In other words, the number K of repetitions of transmission may be indicated, from a set of four candidate values provided by a system parameter numberOfMsg3Repetitions, by two most significant bits (Most Significant Bit, MSB) (that is, two high-order bits) in a modulation and coding scheme (Modulation and Coding Scheme, MCS) field in the RAR uplink grant or DCI 0_0. If numberOfMsg3Repetitions is not configured, the number K of repetitions of transmission may be indicated from {1,2,3,4}.

Table 1. Mapping relationship between two MSBs in the MCS information field and the number K of repetitions of transmission of the Msg3

| numberOfMsg3Repetitions configured | | numberOfMsg3Repetitions not configured | |
|---|---|---|---|
| Code point | K | Code point | K |
| 00 | First value for numberOfMsg3Repetitions | 00 | 1 |
| 01 | Second value for numberOfMsg3Repetitions | 01 | 2 |
| 10 | Third value for numberOfMsg3Repetitions | 10 | 3 |
| 11 | Fourth value for numberOfMsg3Repetitions | 11 | 4 |

As shown in Table 1, a code point may be two MSBs in the MCS field in the RAR uplink grant or DCI 0_0. One of code points is used to indicate one value for the number K of repetitions of transmission.

After requesting a repetition of transmission of the Msg3 PUSCH, the UE re-interprets the MCS information field. In this case, determination of an MCS index $I_{MCS}$ is as shown in Table 2 or Table 3. The MCS index is indicated, from a set of eight candidate values provided by a system parameter mcs-Msg3Repetition, by two least significant bits (Least Significant Bit, LSB) (that is, two low-order bits) in the MCS field in the RAR uplink grant or three LSBs in the MCS field in DCI 0_0. If mcs-Msg3Repetition is not configured, the MCS index is indicated from a default candidate value set.

Table 2. Mapping of two LSBs in the MCS information field in the RAR uplink grant to MCS indexes $I_{MCS}$

| mcs-Msg3Repetition configured | | mcs-Msg3Repetition not configured | |
|---|---|---|---|
| Code point | K | Code point | K |
| 00 | First value for mcs-Msg3Repetition | 00 | 0 |
| 01 | Second value for mcs-Msg3Repetition | 01 | 1 |
| 10 | Third value for mcs-Msg3Repetition | 10 | 2 |
| 11 | Fourth value for mcs-Msg3Repetition | 11 | 3 |

As shown in Table 2, a code point may be two LSBs in the MCS field in the RAR uplink grant. One of code points is used to indicate one value for the number K of repetitions of transmission.

Table 3. Mapping of three LSBs in the MCS information field in DCI 0_0 with CRC scrambled by a TC-RNTI to MCS indexes $I_{MCS}$

| mcs-Msg3Repetition configured | | mcs-Msg3Repetition not configured | |
|---|---|---|---|
| Code point | K | Code point | K |
| 000 | First value for mcs-Msg3Repetition | 000 | 0 |
| 001 | Second value for mcs-Msg3Repetition | 001 | 1 |
| 010 | Third value for mcs-Msg3Repetition | 010 | 2 |
| 011 | Fourth value for mcs-Msg3Repetition | 011 | 3 |
| 100 | Fifth value for mcs-Msg3Repetition | 100 | 4 |
| 101 | Sixth value for mcs-Msg3Repetition | 101 | 5 |
| 110 | Seventh value for mcs-Msg3Repetition | 110 | 6 |

(continued)

| mcs-Msg3Repetition configured | | mcs-Msg3Repetition not configured | |
|---|---|---|---|
| Code point | K | Code point | K |
| 111 | Eighth value for mcs-Msg3Repetition | 111 | 7 |

As shown in Table 3, a code point may be three LSBs in the MCS field in DCI 0_0. One of code points is used to indicate one value for the number K of repetitions of transmission.

(3) Joint channel estimation mechanism

For a type A of repetition of PUSCH transmission scheduled by DCI 0_1 or DCI 0_2, a type A of repetition of PUSCH transmission using a scheduling-free grant, a type B of repetition of PUSCH transmission using a scheduling-free grant, and PUSCH transmission using a transmission block (transmission block, TB) determined based on a plurality of timeslots, if a higher layer parameter *PUSCH-DMRS-Bundling* is enabled, or for a repetition of PUCCH transmission, if a higher layer parameter *PUCCH-DMRS-Bundling* is enabled, the UE may determine one or more nominal time windows (Time Domain Window, TDW) according to a following procedure, and the base station binds a DMRS in each timeslot within the TDW for performing joint channel estimation.

For the type A of repetition of PUSCH transmission, the type B of repetition of PUSCH transmission, and the PUSCH transmission using a TB determined based on a plurality of timeslots, a manner of determining each nominal TDW is as follows.

If a higher layer parameter *PUSCH-TimeDomainWindowLength* is configured, a length of the nominal TDW is a value corresponding to the parameter. If the higher layer parameter is not configured, a length of the nominal TDW is calculated according to $\min(N_{DMRSbundling}^{\max}, \mathrm{M})$, that is, a minimum value between the two, where $N_{DMRSbundling}^{\max}$ indicates a maximum duration for which the UE can maintain power consistency and phase continuity to support DMRS bundling, and M indicates a quantity of consecutive timeslots occupied for PUSCH transmission.

The first timeslot for the first PUSCH transmission is used as a start point of the first nominal TDW. The last timeslot for the last PUSCH transmission is used as an end point of the nominal TDW. The first timeslot that follows the last timeslot in a current nominal TDW and that is used for PUSCH transmission is used as a start point of a next nominal TDW.

For a repetition of PUCCH transmission, for each nominal TDW except the last nominal TDW, a manner of determining a quantity of timeslots of each nominal TDW is as follows.

If a higher layer parameter *PUCCH-TimeDomainWindowLength* is configured, a length of the nominal TDW is a value corresponding to the parameter. If the higher layer parameter is not configured, a length of the nominal TDW is calculated according to $\min(N_{DMRSbundling}^{\max}, \mathrm{M})$, that is, a minimum value between the two, where $N_{DMRSbundling}^{\max}$ indicates a maximum duration for which the UE can maintain power consistency and phase continuity to support DMRS bundling, and M indicates a quantity of consecutive timeslots occupied for PUCCH transmission.

The first timeslot for the first PUCCH transmission is used as a start point of the first nominal TDW. The last timeslot for the last PUCCH transmission is used as an end point of the nominal TDW. The first timeslot that follows the last timeslot in a current nominal TDW and that is used for PUCCH transmission is used as a start point of a next nominal TDW.

It may be learned from the foregoing description that the UE supports only a repetition of transmission of the Msg3 PUSCH in an initial access phase, and does not support another coverage enhancement solution. For example, the UE does not support a repetition of PUCCH transmission and joint channel estimation in the initial access phase. In a communication scenario in which coverage performance is limited, for example, in an NTN system, a current transmission mechanism for an initial access phase may fail to successfully transmit a physical uplink control channel (Physical Uplink Control Channel, PUCCH) for the initial access phase, which leads to an initial access failure of a UE, and reduces coverage performance. In view of this, this application provides a wireless communication method, to improve coverage performance in an initial access phase through further coverage enhancement, thereby ensuring that a UE can still successfully access a system in a scenario in which coverage performance is limited.

FIG. 7 is a schematic flowchart of a wireless communication method 200 according to an embodiment of this application. The wireless communication method 200 may be executed by a terminal device. For example, the wireless communication method 200 may be executed by the terminal device shown in FIG. 1.

As shown in FIG. 7, the method 200 may include following steps.

S210: The terminal device repeatedly transmits a first physical uplink control channel (Physical Uplink Control Channel, PUCCH) to a network device in an initial access phase.

In this embodiment, a repetition of PUCCH transmission is introduced in the initial access phase, which can improve an initial access success rate, and can further improve coverage performance.

Particularly, in a communication scenario in which coverage performance is limited, for example, in an NTN system, the repetition of PUCCH transmission is introduced in the initial access phase, so that the terminal device can successfully transmit the PUCCH for the initial access phase, thereby improving an initial access success rate and coverage performance.

For example, a first PUCCH includes but is not limited to feedback information for the Msg4.

Certainly, in another alternative embodiment, a repetition of PUCCH transmission may also be introduced in another scenario, to improve coverage performance. For example, the first PUCCH may be repeatedly transmitted to a network after a contention-based random access procedure, after the Msg4 is transmitted or before a radio resource control (Radio Resource Control, RRC) connection is established.

For example, the contention-based random access procedure may be triggered by one of following several trigger events:

(1) Initial access (initial access);

(2) Handover (handover);

(3) RRC connection re-establishment (RRC Connection Re-establishment);

(4) Downlink data arrival in an RRC connected state when an uplink synchronization status is "non-synchronized", in this case, after downlink data arrives, the terminal device needs to reply with an acknowledgement (Acknowledgement, ACK) or a negative acknowledgement (Negative Acknowledgement, NACK);

(5) Uplink data arrival in an RRC connected state when an uplink synchronization status is "non-synchronized";

(6) No physical uplink control channel (Physical Uplink Control Channel, PUCCH) resource available for scheduling request (Scheduling Request, SR) transmission in an RRC connected state, in this case, a terminal device that is already in an uplink synchronization state may be allowed to replace the function of the SR with a random access channel (Random Access Channel, RACH);

(7) Transition of a terminal device from an RRC inactive state (RRC_INACTIVE) to an RRC active state (RRC_ACTIVE);

(8) Request of a terminal device for other system information (Other System Information, OSI); and

(9) Beam failure recovery (beam failure recovery) of a terminal device.

In some embodiments, the method 200 may further include:

receiving, by the terminal device, first indication information transmitted by the network device, where the first indication information is used to indicate a number of repetitions of transmission of the first PUCCH.

For example, the number of repetitions of transmission of the first PUCCH is a positive integer greater than 1.

In some embodiments, the first indication information is further used to indicate a number of repetitions of transmission of a Msg3 PUSCH.

For example, the number of repetitions of transmission of the Msg3 PUSCH is a positive integer greater than 1.

Certainly, in another alternative embodiment, indication information used to indicate the number of repetitions of transmission of the first PUCCH and indication information used to indicate the number of repetitions of transmission of the Msg3 PUSCH may alternatively be different indication information, which is not specifically limited in this application.

In some embodiments, the first indication information is carried in a first modulation and coding scheme (Modulation and Coding Scheme, MCS) field.

For example, the first indication information is a value for a bit in the first MCS field.

In this embodiment, the first MCS field is re-interpreted, so that the number of repetitions of transmission of the first PUCCH introduced in the initial access phase can be determined, and no additional bit field needs to be added, that is, no additional signalling overheads need to be added.

In some embodiments, the first MCS field is an MCS field in a random access response (Random Access Response, RAR) uplink grant, or the first MCS field is an MCS field in downlink control information (Downlink Control Information, DCI) 0_0.

For example, the RAR uplink grant or DCI 0_0 further includes a resource indication field used for scheduling the Msg3 PUSCH.

In some embodiments, the first indication information is carried in at least one most significant bit (Most Significant Bit, MSB) in the first MCS field.

For example, the first indication information is a value for a bit in the at least one MSB.

It should be noted that, since the first indication information is carried in the first MCS field, and the first MCS field is generally used to indicate an MCS index $I_{MCS}$, a bit that is in the first MCS field and used to indicate the MCS index $I_{MCS}$ may be re-interpreted in this application.

In some embodiments, at least one least significant bit (Least Significant Bit, LSB) in the first MCS field carries information for indicating the MCS index.

For example, a value for at least one LSB in the first MCS field is used to indicate the MCS index.

For example, a manner of determining the MCS index $I_{MCS}$ may be the same as a manner of determining the MCS index $I_{MCS}$ after the terminal device requests a repetition of transmission of the Msg3 PUSCH, that is, the MCS index $I_{MCS}$ may be indicated, from an index candidate value set including eight index candidate values provided by a system parameter *mcs-Msg3Repetition,* by two LSBs in the MCS field in the RAR uplink grant or three LSBs in the MCS field in DCI 0_0. If *mcs-Msg3Repetition* is not configured, the MCS index $I_{MCS}$ is indicated from a default index candidate value set. For example, the MCS index $I_{MCS}$ may be indicated from the index candidate value set in the manner described in Table 2 or Table 3 above.

In some embodiments, the at least one LSB is used to indicate the MCS index in an index candidate value set configured by a system parameter, or the at least one LSB is used to indicate the MCS index in a default index candidate value set.

For example, the index candidate value set includes at least one index candidate value, and the at least one LSB is used to indicate the MCS index from the at least one index candidate value.

In some embodiments, the first indication information is carried in a first PUCCH resource indication field.

For example, all bits in the first PUCCH resource indication field are used to indicate both the number of repetitions of transmission of the first PUCCH and a transmission resource for the first PUCCH. Optionally, when the first PUCCH includes feedback information for the Msg4, all bits in the first PUCCH resource indication field are used to indicate both the number of repetitions of transmission of the first PUCCH and a transmission resource for the feedback information for the Msg4.

For example, the first PUCCH resource indication field includes an information field used to carry the first indication information and a resource indication field used to indicate the transmission resource for the first PUCCH. Optionally, when the first PUCCH includes the feedback information for the Msg4, the first PUCCH resource indication field includes an information field used to carry the first indication information and a resource indication field used to indicate the transmission resource for the feedback information for the Msg4.

In this embodiment, considering that the first PUCCH is transmitted after the Msg3 PUSCH, the first PUCCH resource indication field in the DCI (for example, DCI 1_0 with CRC scrambled by a TC-RNTI) for scheduling the Msg3 PUSCH is re-interpreted, so that the number of repetitions of transmission of the first PUCCH introduced in the initial access phase can be determined, and no additional bit fields need to be added, that is, no additional signalling overheads need to be added.

In some embodiments, the first PUCCH resource indication field includes a resource indication field in DCI 1_0 with cyclic redundancy check (Cyclic Redundancy Check, CRC) scrambled by a temporary cell-radio network temporary identifier (temporary Cell Radio Network Temporary Identifier, TC-RNTI).

For example, DCI 1_0 with CRC scrambled by a TC-RNTI is DCI used to indicate the transmission resource for the first PUCCH.

In some embodiments, the first PUCCH resource indication field is further used to indicate a transmission resource for the Msg4.

For example, when the first PUCCH includes feedback information for the Msg4, all bits in the first PUCCH resource indication field are used to indicate the number of repetitions of transmission of the first PUCCH, the transmission resource for the feedback information for the Msg4, and the transmission resource for the Msg4.

For example, when the first PUCCH includes the feedback information for the Msg4, the first PUCCH resource indication field includes the information field used to carry the first indication information, a resource indication field used to indicate the transmission resource for the feedback information for the Msg4, and a resource indication field used to indicate the transmission resource for the Msg4.

In some embodiments, the first indication information is used to indicate the number of repetitions of transmission of the first PUCCH from a set of candidate number of repetitions configured by a system parameter, or the first indication information is used to indicate the number of repetitions of transmission of the first PUCCH from a default set of candidate number of repetitions.

For example, the set of candidate number of repetitions includes at least one candidate number of repetitions, and the first indication information is used to indicate the number of repetitions of transmission of the first PUCCH from the at least one candidate number of repetitions.

For example, the system parameter includes a parameter in a system information block (System Information Block, SIB) 1.

For example, the network device may configure, in a system message (for example, the network device may configure, in an SIB 1 of a system message) for the terminal device, a set of candidate number of repetitions *numberOfPUCCHRepetitions* of a number of repetitions of PUCCH transmission (that is, the number of repetitions of transmission of the first PUCCH) that may be used in the initial access phase. For example, *numberOfPUCCHRepetitions* = {1,2,4,8}. Certainly, in another alternative embodiment, the value in the set of candidate number of repetitions may be another value, or the set of candidate number of repetitions may include another number of values in the set of candidate number of repetitions, which is not specifically limited in this application.

In some embodiments, a maximum number of values for the first indication information is greater than or equal to a number of the values in the set of candidate number of repetitions.

In some embodiments, the first indication information is carried in at least one most significant bit MSB in the first MCS field, and a maximum number of values for the at least one MSB is equal to the number of the values in the set of candidate number of repetitions.

For example, it is assumed that the number of repetitions of transmission of the first PUCCH is denoted as N. N may be indicated, from the set of candidate number of repetitions configured by the system parameter *numberOfPUCCHRepetitions,* by two MSBs in the first MCS field. Alternatively, N may be indicated, from the set of candidate number of repetitions configured by the system parameter *numberOfPUCCHRepetitions,* by two MSBs in the MCS field in DCI 0_0. For example, that the set of candidate number of repetitions includes four candidate numbers of repetitions is used as an example. In other words, in a case that the network device configures *numberOfPUCCHRepetitions* for the terminal device, *numberOfPUCCHRepetitions* includes four values. In a case that the network device does not configure *numberOfPUCCHRepetitions* for the terminal device, the default set of candidate number of repetitions includes four default candidate numbers of repetitions, for example, {1,2,4,8}.

A mapping relationship between two MSBs in the first MCS field and the number N of repetitions of transmission of the first PUCCH is exemplarily described below with reference to Table 4.

Table 4. Mapping relationship between two MSBs in the first MCS field and the number N of repetitions of transmission of the first PUCCH

| *numberOfPUCCHRepetitions* configured | | *numberOfPUCCHRepetitions* not configured | |
|---|---|---|---|
| Value for two MSBs in the first MCS field | N | Value for two MSBs in the first MCS field | N |
| 00 | First value for *numberOfPUCCHRepetitions* | 00 | 1 |
| 01 | Second value for *numberOfPUCCHRepetitions* | 01 | 2 |
| 10 | Third value for *numberOfPUCCHRepetitions* | 10 | 4 |
| 11 | Fourth value for *numberOfPUCCHRepetitions* | 11 | 8 |

As shown in Table 4, in a case that a value for the two MSBs in the first MCS field is 00, and in a case that the network device configures *numberOfPUCCHRepetitions* for the terminal device, the number N of repetitions of transmission of the first PUCCH is the first value for *numberOfPUCCHRepetitions.* In a case that the network device does not configure *numberOfPUCCHRepetitions* for the terminal device, the number N of repetitions of transmission of the first PUCCH is the first default candidate number of repetitions in the default set of candidate number of repetitions, that is, the number N of repetitions of transmission of the first PUCCH is 1. In a case that a value for the two MSBs in the first MCS field is 01, and in a case that the network device configures *numberOfPUCCHRepetitions* for the terminal device, the number N of repetitions of transmission of the first PUCCH is the second value for *numberOfPUCCHRepetitions.* In a case that the network device does not configure *numberOfPUCCHRepetitions* for the terminal device, the number N of repetitions of transmission of the first PUCCH is the second default candidate number of repetitions in the default set of candidate number of repetitions, that is, the number N of repetitions of transmission of the first PUCCH is 2. Similarly, when a value for the two MSBs in the first MCS field is 10 or 11, the corresponding number N of repetitions of transmission of the first PUCCH may also be determined.

In some embodiments, in a case that the first indication information is carried in at least one most significant bit MSB in the first MCS field, and a maximum number of values for the at least one MSB is greater than the number of the values in the set of candidate number of repetitions, a plurality of values for the at least one MSB correspond to one candidate number of repetitions in set of candidate number of repetitions, or the first indication information is carried in one or more MSBs in the at least one MSB, or the first indication information is carried in one or more LSBs in the at least one MSB.

In this embodiment, if the number of the values in the set of candidate number of repetitions is less than a number of values that can be indicated by the at least one MSB in the first MCS field, it may be ensured, by introducing a specific rule, that each value for the at least one MSB in the first MCS field can be mapped to a specific candidate number of repetitions, which can ensure validity of the first indication information.

For example, in a mapping table of the value for the at least one MSB in the first MCS field to the number N of repetitions of transmission of the first PUCCH, the candidate numbers of repetitions in the set of candidate number of repetitions may be copied. For example, when the set of candidate number of repetitions includes four candidate numbers of repetitions, and the at least one MSB in the first MCS field is a 3-bit indication field, the at least one MSB in the first MCS field can indicate eight candidate numbers of repetitions. In this case, in the mapping table of the value for the at least one MSB in the first MCS field to the number N of repetitions of transmission of the first PUCCH, the four candidate numbers of repetitions in the set of candidate number of repetitions may be copied once, such that each pair of values for the at least one MSB in the first MCS field may correspond to one candidate number of repetitions in the set of candidate number of repetitions.

For example, the number of repetitions of transmission of the first PUCCH may be indicated, from the set of candidate number of repetitions, by X LSBs (X low-order bits) in the at least one MSB in the first MCS field, where X may be 1/2/3. For example, when the set of candidate number of repetitions includes four candidate numbers of repetitions, and the at least one MSB in the first MCS field is a 3-bit indication field, the number of repetitions of transmission of the first PUCCH may be indicated, from the set of candidate number of repetitions, by two LSBs (two low-order bits) in the at least one MSB in the first MCS field.

A mapping relationship between a value for the at least one MSB in the first MCS field and the number N of repetitions of transmission of the first PUCCH is exemplarily described below with reference to Table 5.

Table 5. Mapping relationship between a value for at least one MSB in the first MCS field and the number N of repetitions of transmission of the first PUCCH

| Value for the at least one MSB in the first MCS field | The Number N of repetitions of transmission of the first PUCCH | |
| --- | --- | --- |
| | *numberOfPUCCHRepetitions* as configured | *numberOfPUCCHRepetitions* not configured |
| 000 | First value for *numberOfPUCCHRepetitions* | 1 |
| 001 | Second value for *numberOfPUCCHRepetitions* | 2 |
| 010 | Third value for *numberOfPUCCHRepetitions* | 4 |
| 011 | Fourth value for *numberOfPUCCHRepetitions* | 8 |
| 100 | First value for *numberOfPUCCHRepetitions* | 1 |
| 101 | Second value for *numberOfPUCCHRepetitions* | 2 |
| 110 | Third value for *numberOfPUCCHRepetitions* | 4 |
| 111 | Fourth value for *numberOfPUCCHRepetitions* | 8 |

As shown in Table 5, in the mapping table of the value for the at least one MSB in the first MCS field to the number N of repetitions of transmission of the first PUCCH, 000 and 100 indicate a same number of repetitions of PUCCH transmission. In other words, since two LSBs of 000 are the same as those of 100, 000 and 100 indicate a same number of repetitions of PUCCH transmission. Similarly, 001 and 101 indicate a same number of repetitions of PUCCH transmission, 010 and 110 indicate a same number of repetitions of PUCCH transmission, and 011 and 111 indicate a same number of repetitions of PUCCH transmission.

For example, the number of repetitions of transmission of the first PUCCH may be indicated, from the set of candidate number of repetitions, by X MSBs (X high-order bits) in the at least one MSB in the first MCS field, where X may be 1/2/3. For example, when the set of candidate number of repetitions includes four candidate numbers of repetitions, and the at least one MSB in the first MCS field is a 3-bit indication field, the number of repetitions of transmission of the first PUCCH may be indicated, from the set of candidate number of repetitions, by two MSBs (two high-order bits) in the at least one MSB in the first MCS field.

A mapping relationship between a value for the at least one MSB in the first MCS field and the number N of repetitions of transmission of the first PUCCH is exemplarily described below with reference to Table 6.

Table 6. Mapping relationship between a value for at least one MSB in the first MCS field and the number N of repetitions of transmission of the first PUCCH

| Value for the at least one MSB in the first MCS field | The number N of repetitions of transmission of the first PUCCH | |
|---|---|---|
| | *numberOfPUCCHRepetitions as* configured | *numberOfPU CCHRepetiti ons* not configured |
| 000 | First value for *numberOfPUCCHRepetitions* | 1 |
| 001 | First value for *numberOfPUCCHRepetitions* | 1 |
| 010 | Second value for *numberOfPUCCHRepetitions* | 2 |
| 011 | Second value for *numberOfPUCCHRepetitions* | 2 |
| 100 | Third value for *numberOfPUCCHRepetitions* | 4 |
| 101 | Third value for *numberOfPUCCHRepetitions* | 4 |
| 110 | Fourth value for *numberOfPUCCHRepetitions* | 8 |
| 111 | Fourth value for *numberOfPUCCHRepetitions* | 8 |

As shown in Table 6, in the mapping table of the value for the at least one MSB in the first MCS field to the number N of repetitions of transmission of the first PUCCH, 000 and 001 indicate a same number of repetitions of PUCCH transmission. In other words, since two MSBs of 000 are the same as those of 001, 000 and 001 indicate a same number of repetitions of PUCCH transmission. Similarly, 010 and 011 indicate a same number of repetitions of PUCCH transmission, 100 and 101 indicate a same number of repetitions of PUCCH transmission, and 110 and 111 indicate a same number of repetitions of PUCCH transmission.

In some embodiments, the first indication information is carried in a first PUCCH resource indication field, and a maximum number of values for the first PUCCH resource indication field is equal to the number of the values in the set of candidate number of repetitions.

A mapping relationship between a value for the first PUCCH resource indication field and the number N of repetitions of transmission of the first PUCCH is exemplarily described below with reference to Table 7.

Table 7. Mapping relationship between a value for the first PUCCH resource indication field and the number N of repetitions of transmission of the first PUCCH

| *numberOfPUCCHRepetitions* configured | | *numberOfPUCCHRepetitions* not configured | |
|---|---|---|---|
| Value for the first PUCCH resource indication field | N | Value for the first PUCCH resource indication field | N |
| 00 | First value for *numberOfPUCCHRepetitions* | 00 | 1 |
| 01 | Second value for *numberOfPUCCHRepetitions* | 01 | 2 |
| 10 | Third value for *numberOfPUCCHRepetitions* | 10 | 4 |
| 11 | Fourth value for *numberOfPUCCHRepetitions* | 11 | 8 |

As shown in Table 7, in a case that a value for the first PUCCH resource indication field is 00, and in a case that the network device configures *numberOfPUCCHRepetitions* for the terminal device, the number N of repetitions of transmission of the first PUCCH is the first value for *numberOfPUCCHRepetitions*. In a case that the network device does not configure *numberOfPUCCHRepetitions* for the terminal device, the number N of repetitions of transmission of the first PUCCH is the first default candidate number of repetitions in a default set of candidate number of repetitions, that is, the number N of repetitions of transmission of the first PUCCH is 1. In a case that a value for the first PUCCH resource indication field is 01, and in a case that the network device configures *numberOfPUCCHRepetitions* for the terminal device, the number N of repetitions of transmission of the first PUCCH is the second value for *numberOfPUCCHRepetitions*. In a case that the network device does not configure *numberOfPUCCHRepetitions* for the terminal device, the number N of repetitions of transmission of the first PUCCH is the second default candidate number of repetitions in a default set of candidate number of repetitions, that is, the number N of repetitions of transmission of the first PUCCH is 2.

Similarly, when a value for the first PUCCH resource indication field is 10 or 11, the corresponding number N of repetitions of transmission of the first PUCCH may also be determined.

In some embodiments, in a case that the first indication information is carried in a first PUCCH resource indication field, and a maximum number of values for the first indication information is greater than the number of the values in the set of candidate number of repetitions, a plurality of values for the first PUCCH resource indication field correspond to one value in the set of candidate number of repetitions, or the first indication information is carried in at least one most significant bit MSB in the first PUCCH resource indication field, or the first indication information is carried in at least one least significant bit LSB in the first PUCCH resource indication field.

In this embodiment, if the number of the values in the set of candidate number of repetitions is less than a number of values that can be indicated by the first PUCCH resource indication field, it may be ensured, by introducing a specific rule, that each value for the first PUCCH resource indication field can be mapped to a specific value of candidate number of repetitions, which can ensure validity of the first indication information.

For example, in a mapping table of the value for the first PUCCH resource indication field to the number N of repetitions of transmission of the first PUCCH, the candidate number of repetitions in the set of candidate number of repetitions may be copied. For example, when the set of candidate number of repetitions includes four candidate numbers of repetitions, and the first PUCCH resource indication field is a 3-bit indication field, the first PUCCH resource indication field can indicate eight candidate numbers of repetitions. In this case, in the mapping table of the value for the first PUCCH resource indication field to the number N of repetitions of transmission of the first PUCCH, the four candidate numbers of repetitions in the set of candidate number of repetitions may be copied once, such that each pair of values for the first PUCCH resource indication field corresponds to one candidate number of repetitions in the set of candidate number of repetitions.

For example, the number of repetitions of transmission of the first PUCCH may be indicated, from the set of candidate number of repetitions, by X LSBs (X low-order bits) in the first PUCCH resource indication field, where X may be 1/2/3. For example, when the set of candidate number of repetitions includes four candidate numbers of repetitions, and the first PUCCH resource indication field is a 3-bit indication field, the number of repetitions of transmission of the first PUCCH may be indicated, from the set of candidate number of repetitions, by two LSBs (two low-order bits) in the first PUCCH resource indication field.

A mapping relationship between a value for the first PUCCH resource indication field and the number N of repetitions of transmission of the first PUCCH is exemplarily described below with reference to Table 8.

Table 8. Mapping relationship between a value for the first PUCCH resource indication field and the number N of repetitions of transmission of the first PUCCH

| Value for the first PUCCH resource indication field | Resource for the first PUCCH | The number N of repetitions of transmission of the first PUCCH | |
|---|---|---|---|
| | | *numberOfPUCCHRepetitions* as configured | *numberOfPUCCHRepetitions* not configured |
| 000 | First resource | First value for *numberOfPUCCHRepetitions* | 1 |
| 001 | Second resource | Second value for *numberOfPUCCHRepetitions* | 2 |
| 010 | Third resource | Third value for *numberOfPUCCHRepetitions* | 4 |
| 011 | Fourth resource | Fourth value for *numberOfPUCCHRepetitions* | 8 |
| 100 | Fifth resource | First value for *numberOfPUCCHRepetitions* | 1 |
| 101 | Sixth resource | Second value for *numberOfPUCCHRepetitions* | 2 |
| 110 | Seventh resource | Third value for *numberOfPUCCHRepetitions* | 4 |
| 111 | Eighth resource | Fourth value for *numberOfPUCCHRepetitions* | 8 |

As shown in Table 8, in the mapping table of the value for the first PUCCH resource indication field to the number N of repetitions of transmission of the first PUCCH, 000 and 100 indicate a same number of repetitions of PUCCH transmission. In other words, since two LSBs of 000 are the same as those of 100, 000 and 100 indicate a same number of repetitions of PUCCH transmission. Similarly, 001 and 101 indicate a same number of repetitions of PUCCH transmission, 010 and 110 indicate a same number of repetitions of PUCCH transmission, and 011 and 111 indicate a same number of repetitions of PUCCH transmission.

For example, the number of repetitions of transmission of the first PUCCH may be indicated, from the set of candidate number of repetitions, by X MSBs (X high-order bits) in the first PUCCH resource indication field, where X may be 1/2/3. For example, when the set of candidate number of repetitions includes four candidate numbers of repetitions, and the first PUCCH resource indication field is a 3-bit indication field, the number of repetitions of transmission of the first PUCCH may be indicated, from the set of candidate number of repetitions, by two MSBs (two high-order bits) in the first PUCCH resource indication field.

A mapping relationship between a value for the first PUCCH resource indication field and the number N of repetitions of transmission of the first PUCCH is exemplarily described below with reference to Table 9.

Table 9. Mapping relationship between a value for the first PUCCH resource indication field and the number N of repetitions of transmission of the first PUCCH

| Value for the first PUCCH resource indication field | Resource for the first PUCCH | The number N of repetitions of transmission of the first PUCCH | |
|---|---|---|---|
| | | *numberOfPUCCHRepetitions* as configured | *numberOfPUCCHRepetitions* not configured |
| 000 | First resource | First value for *numberOfPUCCHRepetitions* | 1 |
| 001 | Second resource | First value for *numberOfPUCCHRepetitions* | 1 |
| 010 | Third resource | Second value for *numberOfPUCCHRepetitions* | 2 |
| 011 | Fourth resource | Second value for *numberOfPUCCHRepetitions* | 2 |
| 100 | Fifth resource | Third value for *numberOfPUCCHRepetitions* | 4 |
| 101 | Sixth resource | Third value for *numberOfPUCCHRepetitions* | 4 |
| 110 | Seventh resource | Fourth value for *numberOfPUCCHRepetitions* | 8 |
| 111 | Eighth resource | Fourth value for *numberOfPUCCHRepetitions* | 8 |

As shown in Table 9, in the mapping table of the value for the first PUCCH resource indication field to the number N of repetitions of transmission of the first PUCCH, 000 and 001 indicate a same number of repetitions of PUCCH transmission. In other words, since two MSBs of 000 are the same as those of 001, 000 and 001 indicate a same number of repetitions of PUCCH transmission. Similarly, 010 and 011 indicate a same number of repetitions of PUCCH transmission, 100 and 101 indicate a same number of repetitions of PUCCH transmission, and 110 and 111 indicate a same number of repetitions of PUCCH transmission.

For example, the terminal device may request a repetition of transmission of the Msg3 PUSCH and a repetition of transmission of the first PUCCH at a time.

For example, the network device may indicate, by using the first indication information, both the number K of repetitions of transmission of the Msg3 PUSCH and the number N of repetitions of transmission of the first PUCCH. For example, the terminal device may determine the number K of repetitions of transmission of the Msg3 PUSCH based on the foregoing Table 1. For another example, the terminal device may determine the number N of repetitions of transmission of the first PUCCH based on any one of the foregoing Table 4 to Table 9.

In some embodiments, S210 may include:
repeatedly transmitting the first PUCCH to the network device in N time units.

N represents a number of repetitions of transmission of the first PUCCH.

In embodiments, the method 200 further includes:
transmitting, by the terminal device, a first request to the network device, where the first request is used to request a repetition of transmission of the first PUCCH.

For example, when a measurement result of a downlink reference signal of the terminal device is less than or equal to a first threshold, the first request is transmitted to the network device.

In some embodiments, the first request requests to repeatedly transmit the first PUCCH by using a physical random access channel (Physical Random Access Channel, PRACH) resource used by a message 1 in a random access procedure.

For example, for the first request, when transmitting the Msg1, the terminal device implicitly requests a repetition of transmission of the first PUCCH from the base station by selecting a specific PRACH resource, that is, a specific PRACH preamble set $U_2$.

For example, when the first indication information is carried in the foregoing first MCS field, the first request requests to repeatedly transmit the first PUCCH by using the PRACH resource used by the message 1 in the random access procedure.

For example, for the first request, a threshold $T_{PUCCH1}$ for the first request may be introduced. If a measurement result of a reference signal received power (Reference Signal Receiving Power, RSRP) of a downlink reference signal of the terminal device is less than $T_{PUCCH1}$, when transmitting the Msg1, the terminal device implicitly requests a repetition of transmission of the first PUCCH from the based station by selecting a specific PRACH resource, for example, a specific PRACH preamble set $U_2$.

In this embodiment, without introducing additional initial access overheads, it can be ensured that the network device and the terminal device have a same understanding of an uplink transmission manner, thereby improving system performance.

For example, the PRACH resource used to request to repeatedly transmit the first PUCCH is the same as or different from the PRACH resource used to request to repeatedly transmit the Msg3 PUSCH.

For example, a PRACH resource used to request a repetition of transmission of the Msg3 PUSCH may be the same as or different from a PRACH resource used to request a repetition of PUCCH transmission.

For example, a PRACH resource used to request a repetition of transmission of the Msg3 PUSCH is denoted as a PRACH preamble set $U_1$, and a PRACH resource used to request a repetition of PUCCH transmission is denoted as a PRACH preamble set $U_2$. In other words, $U_1$ may be the same as or different from $U_2$. If $U_1$ is the same as $U_2$, the PRACH resources in the preamble sets are used to request both a repetition of transmission of the Msg3 PUSCH and a repetition of PUCCH transmission. Certainly, in another alternative embodiment, $U_1$ may alternatively be a PRACH resource used to request a repetition of transmission of the Msg3 PUSCH, and $U_2$ may alternatively be a PRACH resource used to request both a repetition of transmission of the Msg3 PUSCH and a repetition of PUCCH transmission. This is not specifically limited in this application.

In some embodiments, the terminal device transmits the Msg3 to the network device, where the Msg3 includes the first request.

For example, when the first indication information is carried in the foregoing transmission resource for the first PUCCH, the first request is carried in the Msg3.

In this embodiment, after receiving the Msg3, the network device indicates the number of repetitions of transmission of the first PUCCH to the UE. Therefore, the UE may also request a repetition of PUCCH transmission in the Msg3.

In some embodiments, the method 200 may further include:

maintaining, by the terminal device, power consistency of the first PUCCH and phase continuity of the first PUCCH during each first nominal TDW of the at least one first nominal TDW.

In this embodiment, the terminal device maintains power consistency of the first PUCCH and phase continuity of the first PUCCH during each first nominal TDW of the at least one first nominal TDW, which helps the network device to perform joint channel estimation for the first PUCCH, thereby further improving uplink coverage performance.

In some embodiments, the method 200 may further include:

determining, by the terminal device, a length of each first nominal TDW based on a number of repetitions of transmission of the first PUCCH and a length, indicated by the network device, of a time window used for performing joint channel estimation for the first PUCCH.

For example, the network device may provide, for the terminal device in a system message (for example, in an SIB 1 of the system message), the length of the time window used for performing joint channel estimation for the first PUCCH. For example, the length of the time window used for performing joint channel estimation for the first PUCCH may be denoted as *PUCCH-TimeDomainWindowLength.* For example, *PUCCH-TimeDomainWindowLength* = 4. Certainly, in another alternative embodiment, *PUCCH-TimeDomainWindowLength* may alternatively be another value, which is not limited in this application.

In some embodiments, a minimum value between the number of repetitions of transmission of the first PUCCH and the length, indicated by the network device, of the time window used for performing joint channel estimation for the first PUCCH is determined as the length of each first nominal TDW.

For example, in a case that the network device configures *PUCCH-TimeDomainWindowLength* for the terminal device, the terminal device may calculate the length of each first nominal TDW according to min(*PUCCH-TimeDomain-WindowLength*, N), that is, the terminal device may use a minimum value between the two as the length of each first nominal TDW. N represents the number of repetitions of transmission of the first PUCCH. In a case that the network device does not configure *PUCCH-TimeDomainWindowLength* for the terminal device, the terminal device may directly determine N as the length of each first nominal TDW.

In some embodiments, the method 200 may further include:

determining, by the terminal device, a time domain location of each first nominal TDW based on a time unit for the first transmission of the first PUCCH and a time unit for the last transmission of the first PUCCH.

For example, the time unit includes but is not limited to a fixed-length time-domain unit such as a timeslot, a subframe, a half-frame, or a symbol.

That the time unit is a timeslot is used as an example. The terminal device may determine the time domain location of each first nominal TDW based on a timeslot for the first transmission of the first PUCCH and a timeslot for the last transmission of the first PUCCH.

In some embodiments, the terminal device may determine a start point of the first time unit for the first transmission of the first PUCCH as a start point of the 1st first nominal TDW in the at least one first nominal TDW. The terminal device may determine an end point of the last time unit for the last transmission of the first PUCCH as an end point of the last first nominal TDW in the at least one first nominal TDW. The terminal device may determine, as a start point of a first nominal TDW after a current first nominal TDW in the at least one first nominal TDW, a start point of the first time unit that follows the last time unit in the current first nominal TDW and that is used for transmitting the first PUCCH.

That the time unit is a timeslot is used as an example. The terminal device may determine a start point of the first timeslot for the first transmission of the first PUCCH as a start point of the 1st first nominal TDW in the at least one first nominal TDW. The terminal device may determine an end point of the last timeslot for the last transmission of the first PUCCH as an end point of the last first nominal TDW in the at least one first nominal TDW. The terminal device may determine, as a start point of a first nominal TDW after a current first nominal TDW in the at least one first nominal TDW, a start point of the first timeslot that follows the last timeslot in the current first nominal TDW and that is used for transmitting the first PUCCH.

In other words, the first timeslot for the first PUCCH transmission of the first PUCCH is used as the start point of the 1st first nominal TDW. The last timeslot for the last PUCCH transmission of the first PUCCH is used as the end point of the at least one first nominal TDW. The first timeslot that follows the last timeslot in the current first nominal TDW in the at least one first nominal TDW and that is used for PUCCH transmission is used as the start point of the first nominal TDW after the current first nominal TDW.

For example, the current first nominal TDW is any first nominal TDW except for the last first nominal TDW among the at least one first nominal TDW.

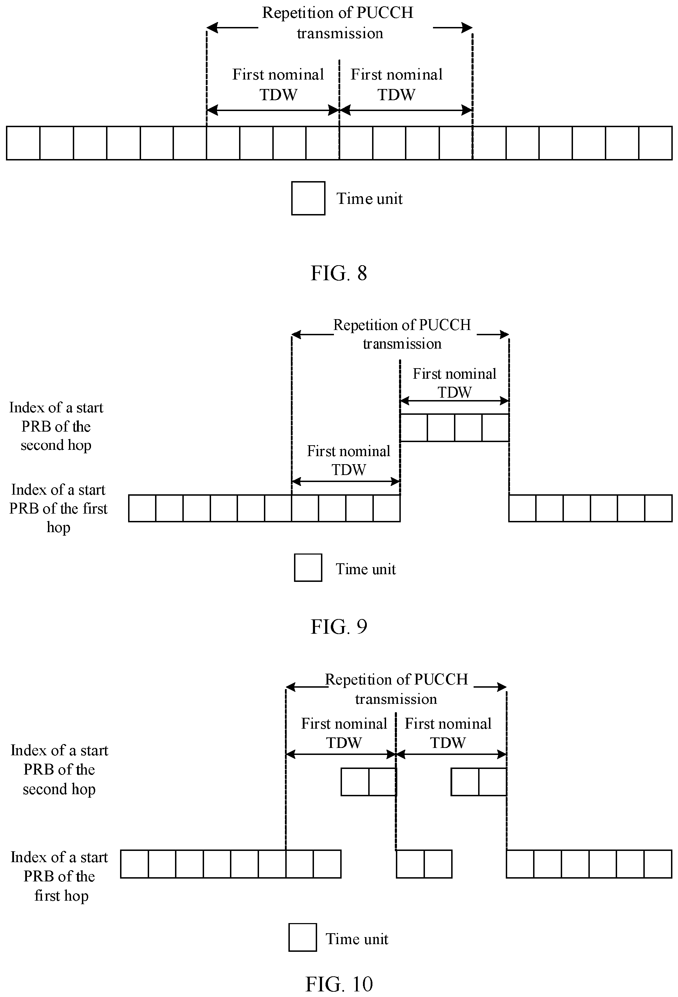

FIG. 8 is a schematic diagram of at least one first nominal TDW according to an embodiment of this application.

As shown in FIG. 8, it is assumed that, the number N of repetitions of transmission of the first PUCCH = 8, and *PUCCH-TimeDomainWindowLength* = 4. In this case, the terminal device may determine, based on a minimum value between the two, that a length of each first nominal TDW is 4, and determine two first nominal TDWs based on the first time unit used for transmitting the first PUCCH.

In some embodiments, in a case that the terminal device performs inter-time unit frequency hopping, and repeatedly transmits the first PUCCH to the network device based on at least one first nominal TDW, when the length of each first nominal TDW is less than or equal to a length of a frequency hopping interval, the terminal device may maintain power consistency of the first PUCCH and phase continuity of the first PUCCH based on each first nominal TDW.

In some embodiments, the method 200 may further include:
in a case that the terminal device performs inter-time unit frequency hopping, and repeatedly transmits the first PUCCH to the network device based on at least one first nominal TDW, when a length of each first nominal TDW is greater than or equal to a length of a frequency hopping interval, maintaining, by the terminal device, power consistency of the first PUCCH and phase continuity of the first PUCCH based on the frequency hopping interval.

In some embodiments, the frequency hopping interval includes at least one consecutive time unit.

In this embodiment, in addition to a repetition of transmission of the first PUCCH, inter-time unit frequency hopping is introduced, and the first PUCCH is repeatedly transmitted to the network device based on at least one first nominal TDW. In addition, when the length of each first nominal TDW is greater than or equal to the length of the frequency hopping interval, the terminal device may maintain power consistency of the first PUCCH and phase continuity of the first PUCCH based on the frequency hopping interval, which can ensure that the network device performs joint channel estimation for the first PUCCH, and thereby further improving uplink coverage performance.

For example, in a case that the terminal device performs inter-time unit frequency hopping, and repeatedly transmits the first PUCCH to the network device based on at least one first nominal TDW, the terminal device performs frequency hopping every $N_{FH}$ consecutive time units starting from the first time unit used for a repetition of PUCCH transmission (that is, original transmission of the first PUCCH and repeated transmission of the first PUCCH).

In some embodiments, the frequency hopping interval is configured by a system parameter, or the frequency hopping interval is a length, indicated by the network device, of a time window used for performing joint channel estimation for the first PUCCH.

For example, a new system parameter *PUCCH-Freqhopping-Interval* may be introduced into an SIB 1, and may be used to configure $N_{FH}$. Optionally, if the network device does not configure $N_{FH}$ for the terminal device, $N_{FH}$ is equal to *PUCCH-TimeDomainWindowLength*. $N_{FH}$ represents the frequency hopping interval.

In some embodiments, the method 200 may further include:
receiving, by the terminal device, second indication information transmitted by the network device, where the second indication information is used to instruct the terminal device to perform inter-time unit frequency hopping.

For example, the second indication information may be carried in a frequency hopping indication information field in the RAR uplink grant or DCI 0_0 with CRC scrambled by a TC-RNTI. Alternatively, the terminal device may be instructed by a frequency hopping indication information field in the RAR uplink grant or DCI 0_0 with CRC scrambled by a TC-RNTI to perform inter-time unit frequency hopping.

In some embodiments, S210 may include:

numbering the frequency hopping interval starting from a time unit for the first transmission of the first PUCCH;
for a frequency hopping interval even numbered, transmitting the first PUCCH at a first frequency domain location; and
for a frequency hopping interval odd numbered, transmitting the first PUCCH at a second frequency domain location.

For example, the first PUCCH is transmitted over a plurality of frequency hopping intervals for N time units, where N represents a number of repetitions of PUCCH transmission indicated by the first indication information. The first frequency hopping interval is numbered as 0. Regardless of whether the terminal device transmits the first PUCCH in a time unit, a number of each frequency hopping interval is subsequently incremented in time domain. Based on this, the terminal device may transmit the first PUCCH from a start PRB corresponding to the first hop over a frequency hopping interval even numbered, and may transmit the first PUCCH from a start PRB corresponding to the second hop over a frequency hopping interval odd numbered. It should be understood that a manner of determining indexes of the start PRBs of the first hop and the second hop is not limited in the application, for example, the indexes of the start PRBs of the first hop and the second hop may be determined based on a manner of allocating frequency domain resources for a common PUCCH.

FIG. 9 and FIG. 10 are schematic diagrams of a relationship between at least one first nominal TDW and a frequency hopping interval according to an embodiment of this application.

As shown in FIG. 9, it is assumed that, the number N of repetitions of transmission of the first PUCCH = 8, and *PUCCH-TimeDomainWindowLength* = 4. In this case, the terminal device may determine, based on a minimum value between the two, that a length of each first nominal TDW is 4, and determine two first nominal TDWs based on the first time unit used for transmitting the first PUCCH. Further, assuming that the frequency hopping interval is 4, the terminal device performs frequency hopping once every four consecutive time units starting from the first time unit used for a repetition of PUCCH transmission (that is, original transmission of the first PUCCH and repeated transmission of the first PUCCH). In this case, since the length of each first nominal TDW (that is, four time units) is equal to the length of the frequency hopping interval (that is, four time units), the terminal device may maintain power consistency of the first PUCCH and phase continuity of the first PUCCH based on the length of each first nominal TDW (that is, four time units).

As shown in FIG. 10, it is assumed that, the number N of repetitions of transmission of the first PUCCH = 8, and *PUCCH-TimeDomainWindowLength* = 4. In this case, the terminal device may determine, based on a minimum value between the two, that a length of each first nominal TDW is 4, and determine two first nominal TDWs based on the first time unit used for transmitting the first PUCCH. Further, assuming that the frequency hopping interval is 2, the terminal device performs frequency hopping every two consecutive time units starting from the first time unit used for a repetition of PUCCH transmission (that is, original transmission of the first PUCCH and repeated transmission of the first PUCCH). In this case, since the length of each first nominal TDW (that is, four time units) is greater than the length of the frequency hopping interval (that is, two time units), the terminal device may maintain power consistency of the first PUCCH and phase continuity of the first PUCCH based on the length of the frequency hopping interval (that is, two time units).

In some embodiments, the method 200 may further include:
transmitting, by the terminal device, a second request to the network device, where the second request is used to request to perform joint channel estimation for the first PUCCH.

For example, when a measurement result of a downlink reference signal of the terminal device is less than or equal to a second threshold, the terminal device transmits the second request to the network device.

For example, when the terminal device transmits the foregoing first request, the terminal device transmits the second request to the network device.

In some embodiments, the second request requests to perform joint channel estimation for the first PUCCH by using a PRACH resource used for a message 1 in a random access procedure.

For example, for the second request, when transmitting the Msg1, the terminal device implicitly requests, by selecting a specific PRACH resource, that is, a specific PRACH preamble set $U_4$, the network device to perform joint channel estimation for the first PUCCH.

For example, when the first indication information is carried in the foregoing first MCS field, the second request requests, by using the PRACH resource used for the message 1 in the random access procedure, to perform joint channel estimation for the first PUCCH.

For example, for the second request, a threshold $T_{PUCCH2}$ for the second request may be introduced. If a measurement result of a reference signal received power (Reference Signal Receiving Power, RSRP) of a downlink reference signal of the terminal device is less than $T_{PUCCH2}$, when transmitting the Msg1, the terminal device implicitly requests, by selecting a specific PRACH resource, for example, a specific PRACH preamble set $U_4$, the network device to perform joint channel estimation for the first PUCCH.

In this embodiment, without introducing additional initial access overheads, it can be ensured that the network device and the terminal device have a same understanding of an uplink transmission manner, thereby improving system performance.

In some embodiments, the PRACH resource used to request to repeatedly transmit the first PUCCH is the same as or different from the PRACH resource used to request to perform joint channel estimation for the first PUCCH.

For example, the PRACH resource used to request PUCCH joint channel estimation is denoted as a PRACH preamble set $U_4$, and the PRACH resource used to request a repetition of PUCCH transmission is denoted as a PRACH preamble set $U_2$, that is, $U_4$ may be the same as or different from $U_2$. If $U_4$ is the same as $U_2$, PRACH resources in the preamble sets are used to request both the PUCCH joint channel estimation and a repetition of PUCCH transmission. Certainly, in another alternative embodiment, $U_4$ may alternatively be a PRACH resource used to request PUCCH joint channel estimation, and $U_2$ may alternatively be a PRACH resource used to request both PUCCH joint channel estimation and a repetition of PUCCH transmission. This is not specifically limited in this application.

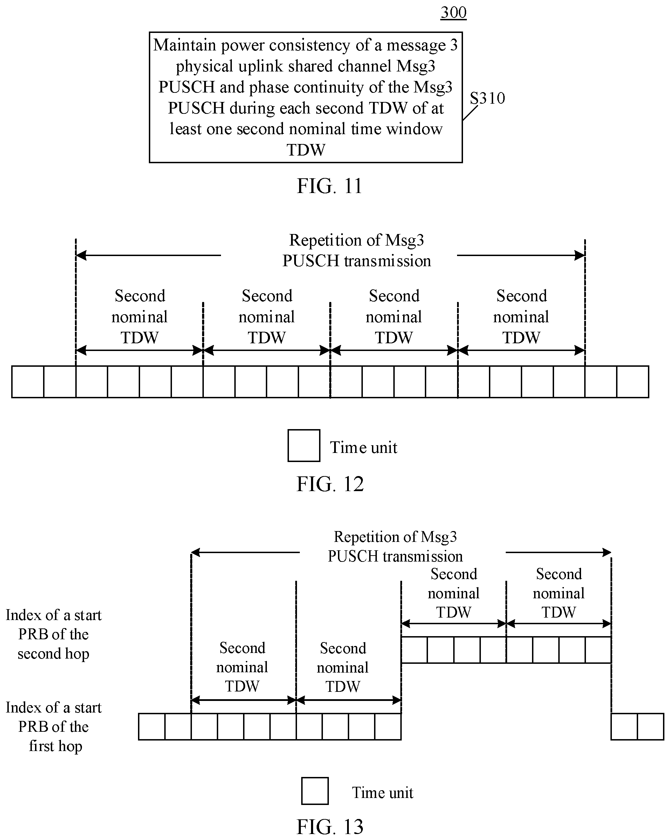

FIG. 11 is a schematic flowchart of a wireless communication method 300 according to an embodiment of this application. The wireless communication method 300 may be executed by a terminal device. For example, the wireless communication method 300 may be executed by the terminal device shown in FIG. 1.

As shown in FIG. 11, the method 300 may include following step:

S310: The terminal device maintains power consistency of a message 3 physical uplink shared channel Msg3 PUSCH and phase continuity of the Msg3 PUSCH during each second TDW of at least one second nominal time window TDW.

In this embodiment, the terminal device maintains power consistency of the Msg3 PUSCH and phase continuity of the Msg3 PUSCH during each second TDW of the at least one second nominal TDW, which helps the network device to perform joint channel estimation for the Msg3 PUSCH, thereby further improving uplink coverage performance.

In some embodiments, the method 300 may further include:

determining, by the terminal device, a length of each second nominal TDW based on a number of repetitions of transmission of the Msg3 PUSCH and a length, indicated by a network device, of a time window used for performing joint channel estimation for the Msg3 PUSCH.

For example, the network device may provide, for the terminal device in a system message (for example, in an SIB 1 of the system message), the length of the time window used for performing joint channel estimation for the Msg3 PUSCH. For example, the length of the time window used for performing joint channel estimation for the Msg3 PUSCH may be denoted as *Msg3-TimeDomainWindowLength.* For example, *Msg3-TimeDomainWindowLength* = 4. Certainly, in another alternative embodiment, *Msg3-TimeDomainWindowLength* may alternatively be another value, which is not limited in this application.

In some embodiments, a minimum value between the number of repetitions of transmission of the Msg3 PUSCH and the length, indicated by the network device, of the time window used for performing joint channel estimation for the Msg3 PUSCH is determined as the length of each second nominal TDW.

For example, in a case that the network device configures *Msg3-TimeDomainWindowLength* for the terminal device, the terminal device may calculate the length of each second nominal TDW according to min(*Msg3-Time-DomainWindowLength*, K), that is, the terminal device may use a minimum value between the two as the length of each second nominal TDW. K represents the number of repetitions of transmission of the Msg3 PUSCH. In a case that the network device does not configure *Msg3-TimeDomainWindowLength* for the terminal device, the terminal device may directly determine N as the length of each second nominal TDW.

In some embodiments, the method 300 may further include:

determining, by the terminal device, a time domain location of each second nominal TDW based on a time unit for the first transmission of the Msg3 PUSCH and a time unit for the last transmission of the Msg3 PUSCH.

For example, the time unit includes but is not limited to a fixed-length time-domain unit such as a timeslot, a subframe, a half-frame, or a symbol.

That the time unit is a timeslot is used as an example. The terminal device may determine the time domain location of each second nominal TDW based on a timeslot for the first transmission of the Msg3 PUSCH and a timeslot for the last transmission of the Msg3 PUSCH.

In some embodiments, the terminal device may determine a start point of the first time unit for the first transmission of the Msg3 PUSCH as a start point of the 1st second nominal TDW in the at least one second nominal TDW. The terminal device may determine an end point of the last time unit for the last transmission of the Msg3 PUSCH as an end point of the last second nominal TDW in the at least one second nominal TDW. The terminal device may determine, as a start point of a second nominal TDW after a current second nominal TDW in the at least one second nominal TDW, a start point of the first time unit that follows the last time unit in the current second nominal TDW and that is used for transmitting the Msg3 PUSCH.

That the time unit is a timeslot is used as an example. The terminal device may determine a start point of the first timeslot for the first transmission of the Msg3 PUSCH as a start point of the 1st second nominal TDW in the at least one second nominal TDW. The terminal device may determine an end point of the last timeslot for the last transmission of the Msg3 PUSCH as an end point of the last second nominal TDW in the at least one second nominal TDW. The terminal device may determine, as a start point of a second nominal TDW after a current second nominal TDW in the at least one second nominal TDW, a start point of the first timeslot that follows the last timeslot in the current second nominal TDW and that is used for transmitting the Msg3 PUSCH.

In other words, the first timeslot for the first transmission of the Msg3 PUSCH is used as the start point of the 1st second nominal TDW. The last timeslot for the last transmission of the Msg3 PUSCH is used as the end point of the at least one second nominal TDW. The first timeslot that follows the last timeslot in the current second nominal TDW for the Msg3 PUSCH, and that is used for transmitting the Msg3 PUSCH is used as the start point of the second nominal TDW after the current second nominal TDW.

For example, the current second nominal TDW is any second nominal TDW except for the last second nominal TDW among the at least one second nominal TDW.

FIG. 12 is a schematic diagram of at least one second nominal TDW according to an embodiment of this application.

As shown in FIG. 12, it is assumed that, the number K of repetitions of transmission of the Msg3 PUSCH = 16, and *Msg3-TimeDomainWindowLength* = 4. In this case, the terminal device may determine, based on a minimum value between the two, that a length of each second nominal TDW is 4, and determine four second nominal TDWs based on the first time unit used for transmitting the Msg3 PUSCH.

In some embodiments, in a case that the terminal device performs inter-time unit frequency hopping, and repeatedly transmits the Msg3 PUSCH to the network device based on at least one second nominal TDW, when the length of each second nominal TDW is less than or equal to a length of a frequency hopping interval, the terminal device may maintain power consistency of the Msg3 PUSCH and phase continuity of the Msg3 PUSCH based on each second nominal TDW.

In some embodiments, the method 300 may further include:
in a case that the terminal device performs inter-time unit frequency hopping, and repeatedly transmits the Msg3 PUSCH to a network device based on at least one second nominal TDW, when a length of each second nominal TDW is greater than or equal to a length of a frequency hopping interval, maintaining, by the terminal device, power consistency of the Msg3 PUSCH and phase continuity of the Msg3 PUSCH based on the frequency hopping interval.

In this embodiment, in addition to a repetition of transmission of the Msg3 PUSCH, inter-time unit frequency hopping is introduced. In addition, when the length of each second nominal TDW is greater than or equal to a length of a frequency hopping interval, the terminal device may maintain power consistency of the Msg3 PUSCH and phase continuity of the Msg3 PUSCH based on the frequency hopping interval, which can ensure that the network device performs joint channel estimation for the Msg3 PUSCH, thereby further improving uplink coverage performance.

For example, in a case that the terminal device performs inter-time unit frequency hopping, the terminal device performs frequency hopping every $N_{FH}$ consecutive time units starting from the first time unit used for a repetition of transmission of the Msg3 PUSCH (that is, original transmission of the Msg3 PUSCH and repeated transmission of the Msg3 PUSCH).

In some embodiments, the frequency hopping interval includes at least one consecutive time unit.

In some embodiments, the frequency hopping interval is configured by a system parameter, or the frequency hopping interval is a length, indicated by the network device, of a time window used for performing joint channel estimation for the Msg3 PUSCH.

For example, a new system parameter *Msg3-Freqhopping-Interval* may be introduced into an SIB 1, and may be used to configure $N_{FH}$. Optionally, if the network device does not configure $N_{FH}$ for the terminal device, $N_{FH}$ is equal to *Msg3-TimeDomainWindowLength*. $N_{FH}$ represents the frequency hopping interval.

In some embodiments, the method 300 may further include:
receiving, by the terminal device, third indication information transmitted by the network device, where the third indication information is used to instruct the terminal device to perform inter-time unit frequency hopping.

For example, the third indication information may be carried in a frequency hopping indication information field in the RAR uplink grant or DCI 0_0 with CRC scrambled by a TC-RNTI. Alternatively, the terminal device may be instructed by a frequency hopping indication information field in the RAR uplink grant or DCI 0_0 with CRC scrambled by a TC-RNTI to perform inter-time unit frequency hopping.

In some embodiments, the method 300 may further include:

numbering the frequency hopping interval starting from a time unit for the first transmission of the Msg3 PUSCH;
for a frequency hopping interval even numbered, transmitting the Msg3 PUSCH at a first frequency domain location; and
for a frequency hopping interval odd numbered, transmitting the Msg3 PUSCH at a second frequency domain location.

For example, the Msg3 PUSCH is transmitted over a plurality of frequency hopping intervals for K time units. The first frequency hopping interval is numbered as 0. Regardless of whether the terminal device transmits the Msg3 PUSCH in a time unit, a number of each frequency hopping interval is subsequently incremented in time domain. Based on this, the terminal device may transmit the Msg3 PUSCH from a start PRB corresponding to the first hop over a frequency hopping interval even numbered, and may transmit the Msg3 PUSCH from a start PRB corresponding to the second hop over a frequency hopping interval odd numbered. It should be understood that a manner of determining indexes of the start PRBs of the first hop and the second hop is not limited, for example, the indexes of the start PRBs of the first hop and the second hop may be determined based on a manner of allocating frequency domain resources for the Msg3 PUSCH.

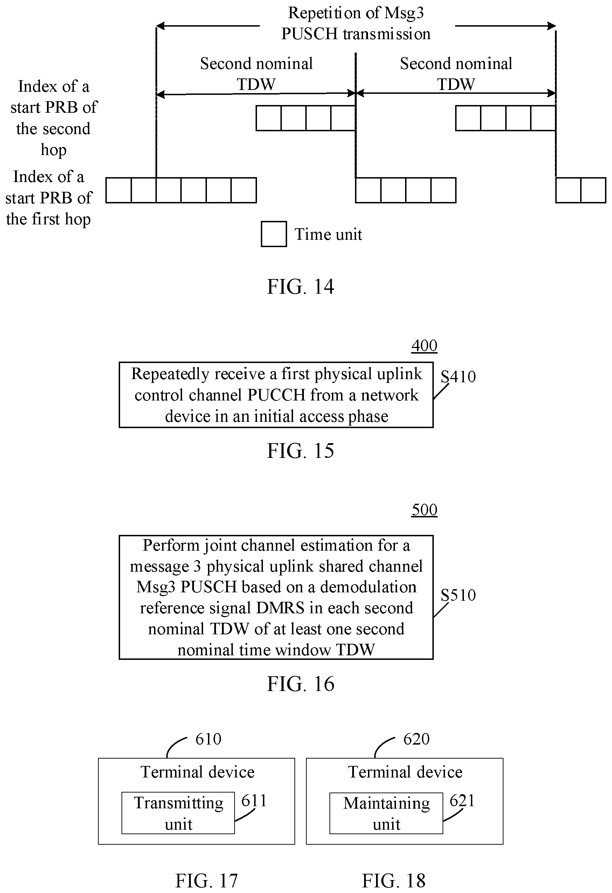

FIG. 13 and FIG. 14 are schematic diagrams of a relationship between at least one second nominal TDW and a frequency hopping interval according to an embodiment of this application.

As shown in FIG. 13, it is assumed that, the number N of repetitions of transmission of the Msg3 PUSCH = 16, and *Msg3-TimeDomain WindowLength* = 4. In this case, the terminal device may determine, based on a minimum value between the two, that a length of each second nominal TDW is 4, and determine four second nominal TDWs based on the first time unit used for transmitting the Msg3 PUSCH. Further, assuming that the frequency hopping interval is 4, the terminal device performs frequency hopping once every four consecutive time units starting from the first time unit used for a repetition of transmission of the Msg3 PUSCH (that is, original transmission of the Msg3 PUSCH and repeated transmission of the Msg3 PUSCH). In this case, since the length of each second nominal TDW (that is, four time units) is equal to the length of the frequency hopping interval (that is, four time units), the terminal device may maintain power consistency of the Msg3 PUSCH and phase continuity of the Msg3 PUSCH based on the length of each second nominal TDW (that is, four time units).

As shown in FIG. 14, it is assumed that, the number N of repetitions of transmission of the Msg3 PUSCH = 16, and *Msg3-TimeDomainWindowLength* = 8. In this case, the terminal device may determine, based on a minimum value between the two, that a length of each second nominal TDW is 8, and determine two second nominal TDWs based on the first time unit used for transmitting the Msg3 PUSCH. Further, assuming that the frequency hopping interval is 4, the terminal device performs frequency hopping every four consecutive time units starting from the first time unit used for a repetition of transmission of the PUCCH (that is, original transmission of the Msg3 PUSCH and repeated transmission of the Msg3 PUSCH). In this case, since the length of each second nominal TDW (that is, eight time units) is greater than the length of the frequency hopping interval (that is, four time units), the terminal device may maintain power consistency of the Msg3 PUSCH and phase continuity of the Msg3 PUSCH based on the length of the frequency hopping interval (that is, four time units).

In some embodiments, the method 300 may further include:
transmitting, by the terminal device, a third request to the network device, where the third request is used to request to perform joint channel estimation for the Msg3 PUSCH.

For example, when a measurement result of a downlink reference signal of the terminal device is less than or equal to a third threshold, the terminal device transmits the third request to the network device.

For example, when the terminal device transmits a request for a repetition of transmission of the Msg3 PUSCH, the terminal device transmits the third request to the network device.

In some embodiments, the third request requests to perform joint channel estimation for the Msg3 PUSCH by using a PRACH resource used for a message 1 in a random access procedure.

For example, for the third request, when transmitting the Msg1, the terminal device implicitly requests, by selecting a specific PRACH resource, that is, a specific PRACH preamble set $U_3$, the network device to perform joint channel estimation for the Msg3 PUSCH.

For example, when the information used for indicating the number of repetitions of transmission of the Msg3 PUSCH is carried in the foregoing first MCS field, the third request requests to perform joint channel estimation for the Msg3 PUSCH by using the PRACH resource used for the message 1 in the random access procedure.

For example, for the third request, a threshold $T_{PUSCH}$ for the third request may be introduced. If a measurement result of a reference signal received power (Reference Signal Receiving Power, RSRP) of a downlink reference signal of the terminal device is less than $T_{PUSCH}$, when transmitting the Msg1, the terminal device implicitly requests, by selecting a specific PRACH resource, for example, a specific PRACH preamble set $U_3$, the network device to perform joint channel estimation for the Msg3 PUSCH.

In this embodiment, without introducing additional initial access overheads, it can be ensured that the network device and the terminal device have a same understanding of an uplink transmission manner, thereby improving system performance.

In some embodiments, the PRACH resource used to request to repeatedly transmit the Msg3 PUSCH is the same as or different from the PRACH resource used to request to perform joint channel estimation for the Msg3 PUSCH.

For example, the PRACH resource used to request joint channel estimation for the Msg3 PUSCH is denoted as a PRACH preamble set $U_3$, and the PRACH resource used to request a repetition of transmission of the Msg3 PUSCH is denoted as a PRACH preamble set $U_1$, that is, $U_3$ may be the same as or different from $U_1$. If $U_3$ is the same as $U_1$, PRACH

resources in the preamble sets are used to request both the joint channel estimation for the Msg3 PUSCH and a repetition of transmission of the Msg3 PUSCH. Certainly, in another alternative embodiment, $U_3$ may alternatively be a PRACH resource used to request joint channel estimation for the Msg3 PUSCH, and $U_1$ may alternatively be a PRACH resource used to request both joint channel estimation for the Msg3 PUSCH and a repetition of transmission of the Msg3 PUSCH. This is not specifically limited in this application.

The foregoing describes in detail the preferred implementations of this application with reference to the accompanying drawings. However, this application is not limited to specific details in the foregoing implementations. Within a technical concept scope of this application, a plurality of simple variations of the technical solutions of this application may be performed, and these simple variations are all within the protection scope of this application. For example, specific technical features described in the foregoing specific implementations may be combined in any suitable manner in the case of no conflict. To avoid unnecessary repetition, various possible combination manners are not described in this application. For another example, any combination may alternatively be performed between different implementations of this application, provided that the combination is not contrary to the idea of this application, and the combination shall also be considered as the content disclosed in this application.

It should be further understood that, in the method embodiments of this application, sequence numbers of the foregoing processes do not mean execution sequences. The execution sequences of the processes shall be determined based on functions and internal logic of the processes, and shall not be construed as any limitation on the implementation processes of embodiments of this application. In addition, in embodiments of this application, the terms "downlink" and "uplink" are used to indicate a transmission direction of a signal or data, where "downlink" indicates that a transmission direction of a signal or data is a first direction from a station to a user equipment in a cell, and "uplink" indicates that a transmission direction of a signal or data is a second direction from a user equipment in a cell to a station. For example, a "downlink signal" indicates that a transmission direction of the signal is the first direction. In addition, in embodiments of this application, the term "and/or" is merely used to describe an association relationship between associated objects, and represents that there may be three relationships. Specifically, A and/or B may represent three cases: only A exists, both A and B exist, and only B exists. In addition, the character "/" herein generally indicates an "or" relationship between the associated objects.

The foregoing describes in detail, from a perspective of the terminal device, the wireless communication method provided in the embodiments of this application. With reference to FIG. 15 to FIG. 16, the following describes, from a perspective of the network device, the wireless communication method provided in the embodiments of this application.

FIG. 15 is a schematic flowchart of a wireless communication method 400 according to an embodiment of this application. The method 400 may be executed by the network device shown in FIG. 1.

As shown in FIG. 15, the method 400 may include:

S410: repeatedly receiving a first physical uplink control channel PUCCH transmitted by a terminal device in an initial access phase.

In some embodiments, the method 400 may further include:

transmitting first indication information to the terminal device, where the first indication information is used to indicate a number of repetitions of transmission of the first PUCCH.

In some embodiments, the first indication information is further used to indicate a number of repetitions of transmission of a Msg3 PUSCH.

In some embodiments, the first indication information is carried in a first modulation and coding scheme MCS field.

In some embodiments, the first MCS field is an MCS field in a random access response RAR uplink grant, or the first MCS field is an MCS field in downlink control information DCI 0_0.

In some embodiments, the first indication information is carried in at least one most significant bit MSB in the first MCS field.

In some embodiments, at least one least significant bit LSB in the first MCS field carries information for indicating an MCS index.

In some embodiments, the at least one LSB is used to indicate the MCS index in an index candidate value set configured by a system parameter, or the at least one LSB is used to indicate the MCS index in a default index candidate value set.

In some embodiments, the first indication information is carried in a first PUCCH resource indication field.

In some embodiments, the first PUCCH resource indication field includes a resource indication field in downlink control information DCI 1_0 with cyclic redundancy check CRC scrambled by a temporary cell-radio network temporary identifier TC-RNTI.

In some embodiments, the first PUCCH resource indication field is further used to indicate a transmission resource for the Msg4.

In some embodiments, the first indication information is used to indicate the number of repetitions of transmission of the first PUCCH from a set of candidate number of repetitions configured by a system parameter, or the first indication information is used to indicate the number of repetitions of transmission of the first PUCCH from a default set of candidate number of repetitions.

In some embodiments, a maximum number of values for the first indication information is greater than or equal to a number of the values in the set of candidate number of repetitions.

In some embodiments, in a case that the first indication information is carried in a first PUCCH resource indication field, and a maximum number of values for the first indication information is greater than the number of the values in the set of candidate number of repetitions, a plurality of values for the first PUCCH resource indication field correspond to one value in the set of candidate number of repetitions, or the first indication information is carried in at least one most significant bit MSB in the first PUCCH resource indication field, or the first indication information is carried in at least one least significant bit LSB in the first PUCCH resource indication field.

In some embodiments, in a case that the first indication information is carried in at least one most significant bit MSB in the first MCS field, and a maximum number of values for the at least one MSB is greater than the number of the values in the set of candidate number of repetitions, a plurality of values for the at least one MSB correspond to one value in the set of candidate number of repetitions, or the first indication information is carried in one or more MSBs in the at least one MSB, or the first indication information is carried in one or more LSBs in the at least one MSB.

In some embodiments, S410 may include:

repeatedly receiving, in N time units, the first PUCCH transmitted by the terminal device.

N represents a number of repetitions of transmission of the first PUCCH.

In some embodiments, the method 400 may further include:

performing joint channel estimation for the first PUCCH based on a demodulation reference signal DMRS in each first nominal TDW of at least one first nominal TDW.

In some embodiments, the method 400 may further include:

determining a length of each first nominal TDW based on a number of repetitions of transmission of the first PUCCH and a length, indicated by the network device, of a time window used for performing joint channel estimation for the first PUCCH.

In some embodiments, a minimum value between the number of repetitions of transmission of the first PUCCH and the length, indicated by the network device, of the time window used for performing joint channel estimation for the first PUCCH is determined as the length of each first nominal TDW.

In some embodiments, the method 400 may further include:

determining a time domain location of each first nominal TDW based on a time unit for the first transmission of the first PUCCH and a time unit for the last transmission of the first PUCCH.

In some embodiments, a start point of the first time unit for the first transmission of the first PUCCH is determined as a start point of the 1st first nominal TDW in the at least one first nominal TDW. An end point of the last time unit for the last transmission of the first PUCCH is determined as an end point of the last first nominal TDW in the at least one first nominal TDW. A start point of the first time unit that follows the last time unit in a current first nominal TDW in the at least one first nominal TDW and that is used for transmitting the first PUCCH is determined as a start point of a first nominal TDW after the current first nominal TDW.

In some embodiments, the method 400 may further include:

in a case that the terminal device performs inter-time unit frequency hopping, and repeatedly transmits the first PUCCH to the network device based on at least one first nominal TDW, when a length of each first nominal TDW is greater than or equal to a length of a frequency hopping interval, performing joint channel estimation for the first PUCCH based on a DMRS within the frequency hopping interval.

In some embodiments, the frequency hopping interval includes at least one consecutive time unit.

In some embodiments, the frequency hopping interval is configured by a system parameter, or the frequency hopping interval is a length, indicated by the network device, of a time window used for performing joint channel estimation for the first PUCCH.

In some embodiments, the method 400 may further include:

transmitting second indication information to the terminal device, where the second indication information is used to instruct the terminal device to perform inter-time unit frequency hopping.

In some embodiments, the repeatedly receiving a first physical uplink control channel PUCCH transmitted by a terminal device includes:

numbering the frequency hopping interval starting from a time unit for the first transmission of the first PUCCH;
for a frequency hopping interval even numbered, receiving the first PUCCH at a first frequency domain location; and
for a frequency hopping interval odd numbered, receiving the first PUCCH at a second frequency domain location.

It should be understood that for steps in the wireless communication method 400, reference may be made to corresponding steps in the wireless communication method 200. For brevity, details are not described herein again.

FIG. 16 is a schematic flowchart of a wireless communication method 500 according to an embodiment of this application. The method 500 may be executed by the network device shown in FIG. 1.

As shown in FIG. 16, the method 500 may include:

S510: performing joint channel estimation for a message 3 physical uplink shared channel Msg3 PUSCH based on a demodulation reference signal DMRS in each second nominal TDW of at least one second nominal time window TDW.

In some embodiments, the method 500 may further include:

determining a length of each second nominal TDW based on a number of repetitions of transmission of the Msg3 PUSCH and a length, indicated by the network device, of a time window used for performing joint channel estimation for the Msg3 PUSCH.

In some embodiments, a minimum value between the number of repetitions of transmission of the Msg3 PUSCH and the length, indicated by the network device, of the time window used for performing joint channel estimation for the Msg3 PUSCH is determined as the length of each second nominal TDW.

In some embodiments, the method 500 may further include:

determining a time domain location of each second nominal TDW based on a time unit for the first transmission of the Msg3 PUSCH and a time unit for the last transmission of the Msg3 PUSCH.

In some embodiments, a start point of the first time unit for the first transmission of the Msg3 PUSCH is determined as a start point of the $1^{st}$ second nominal TDW in the at least one second nominal TDW. An end point of the last time unit for the last transmission of the Msg3 PUSCH is determined as an end point of the last second nominal TDW in the at least one second nominal TDW. A start point of the first time unit that follows the last time unit in a current second nominal TDW in the at least one second nominal TDW and that is used for transmitting the Msg3 PUSCH is determined as a start point of a second nominal TDW after the current second nominal TDW.

In some embodiments, the method 500 may further include:

in a case that a terminal device performs inter-time unit frequency hopping, and repeatedly transmits the Msg3 PUSCH to the network device based on at least one second nominal TDW, when a length of each second nominal TDW is greater than or equal to a length of a frequency hopping interval, performing joint channel estimation for the Msg3 PUSCH based on the frequency hopping interval.

In some embodiments, the frequency hopping interval includes at least one consecutive time unit.

In some embodiments, the frequency hopping interval is configured by a system parameter, or the frequency hopping interval is a length, indicated by the network device, of a time window used for performing joint channel estimation for the Msg3 PUSCH.

In some embodiments, the method 500 may further include:

receiving third indication information, where the third indication information is used to instruct the terminal device to perform inter-time unit frequency hopping.

In some embodiments, the method 500 may further include:

numbering the frequency hopping interval starting from a time unit for the first transmission of the Msg3 PUSCH;

for a frequency hopping interval even numbered, receiving the Msg3 PUSCH at a first frequency domain location; and

for a frequency hopping interval odd numbered, receiving the Msg3 PUSCH at a second frequency domain location.

It should be understood that for steps in the wireless communication method 500, reference may be made to corresponding steps in the wireless communication method 300. For brevity, details are not described herein again.

The foregoing describes the method embodiments of this application in detail with reference to FIG. 1 to FIG. 16. The following describes the apparatus embodiments of this application in detail with reference to FIG. 17 to FIG. 22.

FIG. 17 is a schematic block diagram of a terminal device 610 according to an embodiment of this application.

As shown in FIG. 17, the terminal device 610 may include:

a transmitting unit 611, configured to repeatedly transmit a first physical uplink control channel PUCCH to a network device in an initial access phase.

In some embodiments, the transmitting unit 611 is further configured to:

receive first indication information transmitted by the network device, where the first indication information is used to indicate a number of repetitions of transmission of the first PUCCH.

In some embodiments, the first indication information is further used to indicate a number of repetitions of transmission of a Msg3 PUSCH.

In some embodiments, the first indication information is carried in a first modulation and coding scheme MCS field.

In some embodiments, the first MCS field is an MCS field in a random access response RAR uplink grant, or the first MCS field is an MCS field in downlink control information DCI 0_0.

In some embodiments, the first indication information is carried in at least one most significant bit MSB in the first MCS field.

In some embodiments, at least one least significant bit LSB in the first MCS field carries information for indicating an MCS index.

In some embodiments, the at least one LSB is used to indicate the MCS index in an index candidate value set configured by a system parameter, or the at least one LSB is used to indicate the MCS index in a default index candidate value set.

In some embodiments, the first indication information is carried in a first PUCCH resource indication field.

In some embodiments, the first PUCCH resource indication field includes a resource indication field in downlink control information DCI 1_0 with cyclic redundancy check CRC scrambled by a temporary cell-radio network temporary identifier TC-RNTI.

In some embodiments, the first PUCCH resource indication field is further used to indicate a transmission resource for the Msg4.

In some embodiments, the first indication information is used to indicate the number of repetitions of transmission of the first PUCCH from a set of candidate number of repetitions configured by a system parameter, or the first indication information is used to indicate the number of repetitions of transmission of the first PUCCH from a default set of candidate number of repetitions.

In some embodiments, a maximum number of values for the first indication information is greater than or equal to a number of the values in the set of candidate number of repetitions.

In some embodiments, in a case that the first indication information is carried in a first PUCCH resource indication field, and a maximum number of values for the first indication information is greater than the number of the values in the set of candidate number of repetitions, a plurality of values for the first PUCCH resource indication field correspond to one value in the set of candidate number of repetitions, or the first indication information is carried in at least one most significant bit MSB in the first PUCCH resource indication field, or the first indication information is carried in at least one least significant bit LSB in the first PUCCH resource indication field.

In some embodiments, in a case that the first indication information is carried in at least one most significant bit MSB in the first MCS field, and a maximum number of values for the at least one MSB is greater than the number of the values in the set of candidate number of repetitions, a plurality of values for the at least one MSB correspond to one value in the set of candidate number of repetitions, or the first indication information is carried in one or more MSBs in the at least one MSB, or the first indication information is carried in one or more LSBs in the at least one MSB.

In some embodiments, the transmitting unit 611 is specifically configured to:
repeatedly transmit the first PUCCH to the network device in N time units.

N represents a number of repetitions of transmission of the first PUCCH.

In some embodiments, the transmitting unit 611 is further configured to:
maintain power consistency of the first PUCCH and phase continuity of the first PUCCH during each first nominal TDW of the at least one first nominal TDW.

In some embodiments, the transmitting unit 611 is further configured to:
determine a length of each first nominal TDW based on a number of repetitions of transmission of the first PUCCH and a length, indicated by the network device, of a time window used for performing joint channel estimation for the first PUCCH.

In some embodiments, the transmitting unit 611 is specifically configured to:
determine, as the length of each first nominal TDW, a minimum value between the number of repetitions of transmission of the first PUCCH and the length, indicated by the network device, of the time window used for performing joint channel estimation for the first PUCCH.

In some embodiments, the transmitting unit 611 is further configured to:
determine a time domain location of each first nominal TDW based on a time unit for the first transmission of the first PUCCH and a time unit for the last transmission of the first PUCCH.

In some embodiments, the transmitting unit 611 is specifically configured to:

determine a start point of the first time unit for the first transmission of the first PUCCH as a start point of the 1st first nominal TDW in the at least one first nominal TDW;
determine an end point of the last time unit for the last transmission of the first PUCCH as an end point of the last first nominal TDW in the at least one first nominal TDW; and
determine, as a start point of a first nominal TDW after a current first nominal TDW in the at least one first nominal TDW, a start point of the first time unit that follows the last time unit in the current first nominal TDW and that is used for transmitting the first PUCCH.

In some embodiments, the transmitting unit 611 is further configured to:
in a case that the terminal device performs inter-time unit frequency hopping, and repeatedly transmits the first PUCCH to the network device based on at least one first nominal TDW, when a length of each first nominal TDW is greater than or equal to a length of a frequency hopping interval, maintain power consistency of the first PUCCH and phase continuity of the first PUCCH based on the frequency hopping interval.

In some embodiments, the frequency hopping interval includes at least one consecutive time unit.

In some embodiments, the frequency hopping interval is configured by a system parameter, or the frequency hopping interval is a length, indicated by the network device, of a time window used for performing joint channel estimation for the first PUCCH.

In some embodiments, the transmitting unit 611 is further configured to:
receive second indication information transmitted by the network device, where the second indication information is used to instruct the terminal device to perform inter-time unit frequency hopping.

In some embodiments, the transmitting unit 611 is specifically configured to:

number the frequency hopping interval starting from a time unit for the first transmission of the first PUCCH;
for a frequency hopping interval even numbered, transmit the first PUCCH at a first frequency domain location; and
for a frequency hopping interval odd numbered, transmitting the first PUCCH at a second frequency domain location.

It should be understood that the apparatus embodiments may correspond to the method embodiments, and for similar descriptions, reference may be made to the method embodiments. Specifically, the terminal device 610 shown in FIG. 17 may correspond to a corresponding subject in the method 200 for executing embodiments of this application, and the foregoing and other operations and/or functions of the units in the terminal device 610 aim to implement corresponding procedures in the methods provided in embodiments of this application, respectively. For brevity, details are not described herein again.

FIG. 18 is a schematic block diagram of a terminal device 620 according to an embodiment of this application.

As shown in FIG. 18, the terminal device 620 may include:
a maintaining unit 621, configured to maintain power consistency of a message 3 physical uplink shared channel Msg3 PUSCH and phase continuity of the Msg3 PUSCH during each second TDW of at least one second nominal time window TDW.

In some embodiments, the maintaining unit 621 is further configured to:
determine a length of each second nominal TDW based on a number of repetitions of transmission of the Msg3 PUSCH and a length, indicated by a network device, of a time window used for performing joint channel estimation for the Msg3 PUSCH.

In some embodiments, the maintaining unit 621 is specifically configured to:
determine, as the length of each second nominal TDW, a minimum value between the number of repetitions of transmission of the Msg3 PUSCH and the length, indicated by the network device, of the time window used for performing joint channel estimation for the Msg3 PUSCH.

In some embodiments, the maintaining unit 621 is further configured to:
determine a time domain location of each second nominal TDW based on a time unit for the first transmission of the Msg3 PUSCH and a time unit for the last transmission of the Msg3 PUSCH.

In some embodiments, the maintaining unit 621 is specifically configured to:

determine a start point of the first time unit for the first transmission of the Msg3 PUSCH as a start point of the 1st second nominal TDW in the at least one second nominal TDW;
determine an end point of the last time unit for the last transmission of the Msg3 PUSCH as an end point of the last second nominal TDW in the at least one second nominal TDW; and
determine, as a start point of a second nominal TDW after a current second nominal TDW in the at least one second nominal TDW, a start point of the first time unit that follows the last time unit in the current second nominal TDW and that is used for transmitting the Msg3 PUSCH.

In some embodiments, the maintaining unit 621 is further configured to:
in a case that the terminal device performs inter-time unit frequency hopping, and repeatedly transmits the Msg3 PUSCH to a network device based on at least one second nominal TDW, when a length of each second nominal TDW is greater than or equal to a length of a frequency hopping interval, maintain power consistency of the Msg3 PUSCH and phase continuity of the Msg3 PUSCH based on the frequency hopping interval.

In some embodiments, the frequency hopping interval includes at least one consecutive time unit.

In some embodiments, the frequency hopping interval is configured by a system parameter, or the frequency hopping interval is a length, indicated by the network device, of a time window used for performing joint channel estimation for the Msg3 PUSCH.

In some embodiments, the maintaining unit 621 is further configured to:
receive third indication information, where the third indication information is used to instruct the terminal device to perform inter-time unit frequency hopping.

In some embodiments, the maintaining unit 621 is further configured to:

number the frequency hopping interval starting from a time unit for the first transmission of the Msg3 PUSCH;

for a frequency hopping interval even numbered, transmit the Msg3 PUSCH at a first frequency domain location; and

for a frequency hopping interval odd numbered, transmit the Msg3 PUSCH at a second frequency domain location.

It should be understood that the apparatus embodiments may correspond to the method embodiments, and for similar descriptions, reference may be made to the method embodiments. Specifically, the terminal device 620 shown in FIG. 18 may correspond to a corresponding subject in the method 300 for executing embodiments of this application, and the foregoing and other operations and/or functions of the units in the terminal device 620 aim to implement corresponding procedures in the methods provided in embodiments of this application, respectively. For brevity, details are not described herein again.

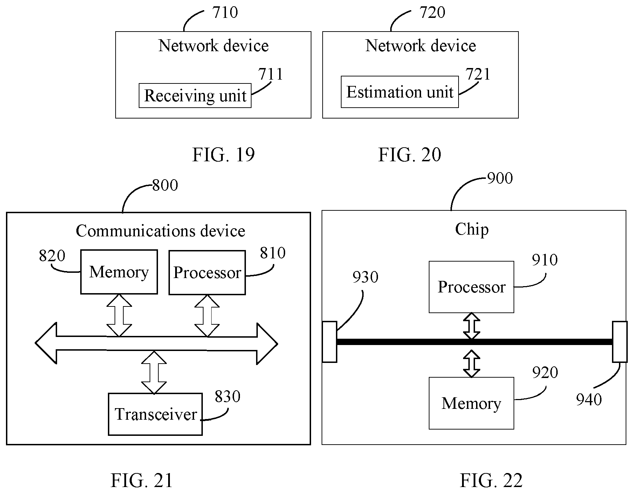

FIG. 19 is a schematic block diagram of a network device 710 according to an embodiment of this application.

As shown in FIG. 19, the network device 710 may include:

a receiving unit 711, configured to repeatedly receive a first physical uplink control channel PUCCH transmitted by a terminal device in an initial access phase.

In some embodiments, the receiving unit 711 is further configured to:

transmit first indication information to the terminal device, where the first indication information is used to indicate a number of repetitions of transmission of the first PUCCH.

In some embodiments, the first indication information is further used to indicate a number of repetitions of transmission of a Msg3 PUSCH.

In some embodiments, the first indication information is carried in a first modulation and coding scheme MCS field.

In some embodiments, the first MCS field is an MCS field in a random access response RAR uplink grant, or the first MCS field is an MCS field in downlink control information DCI 0_0.

In some embodiments, the first indication information is carried in at least one most significant bit MSB in the first MCS field.

In some embodiments, at least one least significant bit LSB in the first MCS field carries information for indicating an MCS index.

In some embodiments, the at least one LSB is used to indicate the MCS index in an index candidate value set configured by a system parameter, or the at least one LSB is used to indicate the MCS index in a default index candidate value set.

In some embodiments, the first indication information is carried in a first PUCCH resource indication field.

In some embodiments, the first PUCCH resource indication field includes a resource indication field in downlink control information DCI 1_0 with cyclic redundancy check CRC scrambled by a temporary cell-radio network temporary identifier TC-RNTI.

In some embodiments, the first PUCCH resource indication field is further used to indicate a transmission resource for the Msg4.

In some embodiments, the first indication information is used to indicate the number of repetitions of transmission of the first PUCCH from a set of candidate number of repetitions configured by a system parameter, or the first indication information is used to indicate the number of repetitions of transmission of the first PUCCH from a default set of candidate number of repetitions.

In some embodiments, a maximum number of values for the first indication information is greater than or equal to a number of the values in the set of candidate number of repetitions.

In some embodiments, in a case that the first indication information is carried in a first PUCCH resource indication field, and a maximum number of values for the first indication information is greater than the number of the values in the set of candidate number of repetitions, a plurality of values for the first PUCCH resource indication field correspond to one value in the set of candidate number of repetitions, or the first indication information is carried in at least one most significant bit MSB in the first PUCCH resource indication field, or the first indication information is carried in at least one least significant bit LSB in the first PUCCH resource indication field.

In some embodiments, in a case that the first indication information is carried in at least one most significant bit MSB in the first MCS field, and a maximum number of values for the at least one MSB is greater than a number of values in the set of candidate number of repetitions, a plurality of values for the at least one MSB correspond to one value in the set of candidate number of repetitions, or the first indication information is carried in one or more MSBs in the at least one MSB, or the first indication information is carried in one or more LSBs in the at least one MSB.

In some embodiments, the receiving unit 711 is specifically configured to:

repeatedly receive, in N time units, the first PUCCH transmitted by the terminal device.

N represents a number of repetitions of transmission of the first PUCCH.

In some embodiments, the receiving unit 711 is further configured to:

perform joint channel estimation for the first PUCCH based on a demodulation reference signal DMRS in each first nominal TDW of at least one first nominal TDW.

In some embodiments, the receiving unit 711 is further configured to:

determine a length of each first nominal TDW based on a number of repetitions of transmission of the first PUCCH and a length, indicated by the network device, of a time window used for performing joint channel estimation for the first PUCCH.

In some embodiments, the receiving unit 711 is specifically configured to:

determine, as the length of each first nominal TDW, a minimum value between the number of repetitions of transmission of the first PUCCH and the length, indicated by the network device, of the time window used for performing joint channel estimation for the first PUCCH.

In some embodiments, the receiving unit 711 is further configured to:

determine a time domain location of each first nominal TDW based on a time unit for the first transmission of the first PUCCH and a time unit for the last transmission of the first PUCCH.

In some embodiments, the receiving unit 711 is specifically configured to:

determine a start point of the first time unit for the first transmission of the first PUCCH as a start point of the 1$^{st}$ first nominal TDW in the at least one first nominal TDW;

determine an end point of the last time unit for the last transmission of the first PUCCH as an end point of the last first nominal TDW in the at least one first nominal TDW; and

determine, as a start point of a first nominal TDW after a current first nominal TDW in the at least one first nominal TDW, a start point of the first time unit that follows the last time unit in the current first nominal TDW and that is used for transmitting the first PUCCH.

In some embodiments, the receiving unit 711 is further configured to:

in a case that the terminal device performs inter-time unit frequency hopping, and repeatedly transmits the first PUCCH to the network device based on at least one first nominal TDW, when a length of each first nominal TDW is greater than or equal to a length of a frequency hopping interval, perform joint channel estimation for the first PUCCH based on a DMRS within the frequency hopping interval.

In some embodiments, the frequency hopping interval includes at least one consecutive time unit.

In some embodiments, the frequency hopping interval is configured by a system parameter, or the frequency hopping interval is a length, indicated by the network device, of a time window used for performing joint channel estimation for the first PUCCH.

In some embodiments, the receiving unit 711 is further configured to:

transmit second indication information to the terminal device, where the second indication information is used to instruct the terminal device to perform inter-time unit frequency hopping.

In some embodiments, the receiving unit 711 is specifically configured to:

number the frequency hopping interval starting from a time unit for the first transmission of the first PUCCH;

for a frequency hopping interval even numbered, receive the first PUCCH at a first frequency domain location; and

for a frequency hopping interval odd numbered, receive the first PUCCH at a second frequency domain location.

It should be understood that the apparatus embodiments may correspond to the method embodiments, and for similar descriptions, reference may be made to the method embodiments. Specifically, the network device 710 shown in FIG. 19 may correspond to a corresponding subject that executes the method 400 in embodiments of this application, and the foregoing and other operations and/or functions of the units in the network device 710 aim to implement corresponding procedures in the methods provided in embodiments of this application, respectively. For brevity, details are not described herein again.

FIG. 20 is a schematic block diagram of a network device 720 according to an embodiment of this application.

As shown in FIG. 20, the network device 720 may include:

an estimation unit 721, configured to perform joint channel estimation for a message 3 physical uplink shared channel Msg3 PUSCH based on a demodulation reference signal DMRS in each second nominal TDW of at least one second nominal time window TDW.

In some embodiments, the estimation unit 721 is further configured to:

determine a length of each second nominal TDW based on a number of repetitions of transmission of the Msg3 PUSCH and a length, indicated by the network device, of a time window used for performing joint channel estimation for the Msg3 PUSCH.

In some embodiments, the estimation unit 721 is specifically configured to:

determine, as the length of each second nominal TDW, a minimum value between the number of repetitions of transmission of the Msg3 PUSCH and the length, indicated by the network device, of the time window used for performing joint channel estimation for the Msg3 PUSCH.

In some embodiments, the estimation unit 721 is further configured to:
determine a time domain location of each second nominal TDW based on a time unit for the first transmission of the Msg3 PUSCH and a time unit for the last transmission of the Msg3 PUSCH.

In some embodiments, the estimation unit 721 is specifically configured to:

determine a start point of the first time unit for the first transmission of the Msg3 PUSCH as a start point of the 1st second nominal TDW in the at least one second nominal TDW;
determine an end point of the last time unit for the last transmission of the Msg3 PUSCH as an end point of the last second nominal TDW in the at least one second nominal TDW; and
determine, as a start point of a second nominal TDW after a current second nominal TDW in the at least one second nominal TDW, a start point of the first time unit that follows the last time unit in the current second nominal TDW and that is used for transmitting the Msg3 PUSCH.

In some embodiments, the estimation unit 721 is further configured to:
in a case that a terminal device performs inter-time unit frequency hopping, and repeatedly transmits the Msg3 PUSCH to the network device based on at least one second nominal TDW, when a length of each second nominal TDW is greater than or equal to a length of a frequency hopping interval, perform joint channel estimation for the Msg3 PUSCH based on the frequency hopping interval.

In some embodiments, the frequency hopping interval includes at least one consecutive time unit.

In some embodiments, the frequency hopping interval is configured by a system parameter, or the frequency hopping interval is a length, indicated by the network device, of a time window used for performing joint channel estimation for the Msg3 PUSCH.

In some embodiments, the estimation unit 721 is further configured to:
receive third indication information, where the third indication information is used to instruct the terminal device to perform inter-time unit frequency hopping.

In some embodiments, the estimation unit 721 is further configured to:

number the frequency hopping interval starting from a time unit for the first transmission of the Msg3 PUSCH;
for a frequency hopping interval even numbered, receive the Msg3 PUSCH at a first frequency domain location; and
for a frequency hopping interval odd numbered, receive the Msg3 PUSCH at a second frequency domain location.

It should be understood that the apparatus embodiments may correspond to the method embodiments, and for similar descriptions, reference may be made to the method embodiments. Specifically, the network device 720 shown in FIG. 20 may correspond to a corresponding subject that executes the method 500 in embodiments of this application, and the foregoing and other operations and/or functions of the units in the network device 720 aim to implement corresponding procedures in the methods provided in embodiments of this application, respectively. For brevity, details are not described herein again.

The communication devices in embodiments of this application are described above from a perspective of a functional module with reference to the accompanying drawings. It should be understood that, the functional module may be implemented in a hardware form, may be implemented by using instructions in a software form, or may be implemented by using a combination of hardware and a software module. Specifically, the steps in the method embodiments in embodiments of this application may be completed by using an integrated logic circuit of hardware in a processor and/or instructions in a software form. The steps in the methods disclosed with reference to embodiments of this application may be directly performed by a hardware decoding processor, or may be performed by using a combination of hardware in the decoding processor and a software module. Optionally, the software module may be located in a mature storage medium in the art, such as a random access memory, a flash memory, a read-only memory, a programmable read-only memory, an electrically erasable programmable memory, or a register. The storage medium is located in a memory. The processor reads information from the memory, and performs the steps in the foregoing method embodiments in combination with the hardware in the processor.

For example, both the foregoing processing unit and communications unit may be implemented by a processor and a transceiver, respectively.

FIG. 21 is a schematic structural diagram of a communications device 800 according to an embodiment of this application.

As shown in FIG. 21, the communications device 800 may include a processor 810.

The processor 810 may invoke a computer program from a memory and run the computer program to implement a method in embodiments of this application.

As shown in FIG. 21, the communications device 800 may further include a memory 820.

The memory 820 may be configured to store indication information, and may be further configured to store code, an instruction, and the like that are executed by the processor 810. The processor 810 may invoke a computer program from the memory 820 and run the computer program to implement a method in embodiments of this application. The memory 820 may be a separate component independent of the processor 810, or may be integrated into the processor 810.

As shown in FIG. 21, the communications device 800 may further include a transceiver 830.

The processor 810 may control the transceiver 830 to communicate with another device. Specifically, the processor may transmit information or data to the another device, or receive information or data transmitted by the another device. The transceiver 830 may include a transmitter and a receiver. The transceiver 830 may further include an antenna, and there may be one or more antennas.

It should be understood that components in the communications device 800 are connected by using a bus system. In addition to a data bus, the bus system includes a power bus, a control bus, and a status signal bus.

It should be further understood that the communications device 800 may be the terminal device in embodiments of this application, and the communications device 800 may implement a corresponding procedure implemented by the terminal device in methods in embodiments of this application. In other words, the communications device 800 in the embodiments of this application may correspond to the terminal device 610 or terminal device 620 in embodiments of this application, and may correspond to a corresponding subject for executing the method 200 or 300 according to embodiments of this application. For brevity, details are not described herein again. Similarly, the communications device 800 may be a network device in embodiments of this application, and the communications device 800 may implement a corresponding procedure implemented by the network device in the methods in embodiments of this application. In other words, the communications device 800 in embodiments of this application may correspond to the network device 710 or network device 720 in embodiments of this application, and may correspond to a corresponding subject that executes the method 400 or 500 according to embodiments of this application. For brevity, details are not described herein again.

In addition, an embodiment of this application further provides a chip.

For example, the chip may be an integrated circuit chip, which has a signal processing capability, and may implement or execute the methods, steps, and logical block diagrams disclosed in embodiments of this application. The chip may also be referred to as a system-level chip, a system chip, a chip system, or a system-on-chip, or the like. Optionally, the chip may be applied to various communications devices, so that a communications device on which the chip is installed can execute the methods, steps, and logical block diagrams disclosed in embodiments of this application.

FIG. 22 is a schematic structural diagram of a chip 900 according to an embodiment of this application.

As shown in FIG. 22, the chip 900 includes a processor 910.

The processor 910 may invoke a computer program from a memory and run the computer program to implement the methods in embodiments of this application.

As shown in FIG. 22, the chip 900 may further include a memory 920.

The processor 910 may invoke a computer program from the memory 920 and run the computer program to implement the methods in embodiments of this application. The memory 920 may be configured to store indication information, and may be further configured to store code, an instruction, and the like that are executed by the processor 910. The memory 920 may be a separate component independent of the processor 910, or may be integrated into the processor 910.

As shown in FIG. 22, the chip 900 may further include an input interface 930.

The processor 910 may control the input interface 930 to communicate with another device or chip, and specifically, may obtain information or data transmitted by the another device or chip.

As shown in FIG. 22, the chip 900 may further include an output interface 940.

The processor 910 may control the output interface 940 to communicate with another device or chip, and specifically, may output information or data to the another device or chip.

It should be understood that the chip 900 may be applied to a network device in embodiments of this application, and the chip may implement a corresponding procedure implemented by the network device in the methods in embodiments of this application, or may implement a corresponding procedure implemented by a terminal device in the methods in embodiments of this application. For brevity, details are not described herein again.

It should be further understood that components in the chip 900 are connected by using a bus system. In addition to a data bus, the bus system further includes a power bus, a control bus, and a status signal bus.

The foregoing processor may include but is not limited to:

a general-purpose processor, a digital signal processor (Digital Signal Processor, DSP), an application-specific integrated circuit (Application Specific Integrated Circuit, ASIC), a field programmable gate array (Field Programmable Gate Array, FPGA) or another programmable logic device, a discrete gate or a transistor logic device, a discrete hardware component, and the like.

The processor may be configured to implement or execute the methods, steps, and logical block diagrams disclosed in embodiments of this application. The steps of the methods disclosed with reference to embodiments of this application may be directly performed by a hardware decoding processor, or may be performed by using a combination of hardware in the decoding processor and a software module. The software module may be located in a mature storage medium in the art, such as a random access memory, a flash memory, a read-only memory, a programmable read-only memory, an erasable programmable memory, or a register. The storage medium is located in a memory. The processor reads information from the memory, and performs the steps of the foregoing methods in combination with the hardware in the processor.

The foregoing memory includes but is not limited to:

a volatile memory and/or a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), and is used as an external cache. By way of example but not limitative description, many forms of RAMs are available, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (synch link DRAM, SLDRAM), and a direct rambus random access memory (Direct Rambus RAM, DR RAM).

It should be noted that the memories described in this specification are intended to include these memories and any other suitable types of memories.

An embodiment of this application further provides a computer-readable storage medium, configured to store a computer program. The computer-readable storage medium stores one or more programs, and the one or more programs include instructions. When the instructions are executed by a portable electronic device including a plurality of applications, the portable electronic device is enabled to execute the wireless communication method provided in this application. Optionally, the computer-readable storage medium may be applied to a network device in embodiments of this application, and the computer program causes a computer to execute corresponding procedures implemented by the network device in the methods in embodiments of this application. For brevity, details are not described herein again. Optionally, the computer-readable storage medium may be applied to a mobile terminal or a terminal device in embodiments of this application, and the computer program causes a computer to execute corresponding procedures implemented by the mobile terminal or the terminal device in the methods in embodiments of this application. For brevity, details are not described herein again.

An embodiment of this application further provides a computer program product, including a computer program. Optionally, the computer program product may be applied to a network device in embodiments of this application, and the computer program causes a computer to execute a corresponding procedure implemented by the network device in the methods in embodiments of this application. For brevity, details are not described herein again. Optionally, the computer program product may be applied to a mobile terminal/terminal device in embodiments of this application, and the computer program enables a computer to perform a corresponding procedure implemented by the mobile terminal/terminal device in the methods in embodiments of this application. For brevity, details are not described herein.

An embodiment of this application further provides a computer program. When the computer program is executed by a computer, the computer is enabled to perform the wireless communication method provided in this application. Optionally, the computer program may be applied to a network device in embodiments of the this application. When the computer program runs on a computer, the computer is enabled to perform a corresponding procedure implemented by the network device in the methods in embodiments of this application. For brevity, details are not described herein again. Optionally, the computer program may be applied to a mobile terminal or a terminal device in embodiments of this application. When the computer program runs on a computer, the computer is enabled to perform a corresponding procedure implemented by the mobile terminal or the terminal device in the methods in embodiments of this application. For brevity, details are not described herein again.

An embodiment of this application further provides a communications system. The communications system may include the foregoing terminal device and network device, so as to form the communications system 100 shown in FIG. 1. For brevity, details are not described herein again. It should be noted that the term "system" and the like in this specification may also be referred to as a "network management architecture", a "network system", or the like.

It should be further understood that terms used in embodiments of this application and the appended claims are merely intended to describe specific embodiments, but are not intended to limit embodiments of this application. For example, the singular forms of "a/an", "said", "described above", and "the" used in embodiments of this application and the appended claims are also intended to include plural forms, unless the context clearly implies otherwise.

A person skilled in the art may be aware that, the units and the algorithm steps in the examples described with reference to embodiments disclosed in this specification can be implemented by electronic hardware or a combination of computer software and electronic hardware. Whether the functions are performed by hardware or software depends on particular applications and design constraint conditions of the technical solutions. A skilled person may use different methods for each specific application to implement the described functions, but this implementation should not be considered as beyond the scope of embodiments of this application. When the function is implemented in a form of a software functional unit and sold or used as an independent product, the function may be stored in a computer-readable storage medium. Based on such an understanding, the technical solutions in embodiments of this application essentially, or the part contributing to the conventional technology, or some of the technical solutions may be implemented in a form of a software product. The computer software product is stored in a storage medium and includes several instructions for instructing a computer device (which may be a personal computer, a server, a network device, or the like) to perform all or some of the steps of the methods in embodiments of this application. The foregoing storage medium includes any medium that can store program code, such as a USB flash drive, a removable hard disk, a read-only memory, a random access memory, a magnetic disk, or an optical disc.

A person skilled in the art may be further aware that, for convenience and brevity of description, for specific working processes of the system, the apparatuses, and the unit described above, refer to corresponding processes in the foregoing method embodiments. Details are not described herein again. In the several embodiments provided in this application, it should be understood that the disclosed system, apparatus, and method may be implemented in other manners. For example, the unit division, module division, or component division in the apparatus embodiments described above is merely logical function division, and there may be other division manners in actual implementation. For example, a plurality of units or modules or components may be combined or integrated into another system, or some units or modules or components may be ignored or not performed. For another example, the foregoing units/modules/components described as separate/display parts may be or may not be physically separated, that is, may be located in one place, or may be distributed on a plurality of network units. Some or all of the units/modules/components may be selected based on an actual requirement to achieve the objectives of embodiments of this application. Finally, it should be noted that the foregoing displayed or discussed mutual couplings or direct couplings or communication connections may be implemented by using some interfaces. The indirect couplings or communication connections between the apparatuses or the units may be in an electrical form, a mechanical form, or another form.

The foregoing content is merely specific implementations of embodiments of this application, but is not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

**Claims**

1. A wireless communication method (200), the method (200) being applicable to a terminal device, and comprising:

   repeatedly transmitting (S210) a first physical uplink control channel, PUCCH, to a network device in an initial access phase or before a radio resource control, RRC, connection is established;
   the method further comprises:

   transmitting a first request to the network device, wherein the first request is used to request a repetition of transmission of the first PUCCH,
   wherein the transmitting a first request to the network device comprises:
   transmitting a message 3, Msg3, to the network device, wherein the Msg3 comprises the first request.

2. The method according to claim 1, wherein the transmitting a first request to the network device comprises:
   when a measurement result of a downlink reference signal of the terminal device is less than a first threshold, transmitting the first request to the network device.

3. The method according to claim 1 or 2, further comprising:
   receiving first indication information transmitted by the network device, wherein the first indication information is used to indicate a number of repetitions of transmission of the first PUCCH.

4. The method according to claim 3, wherein the first indication information is used to indicate the number of repetitions of transmission of the first PUCCH from a set of candidate number of repetitions configured by a system information, or the first indication information is used to indicate the number of repetitions of transmission of the first PUCCH form a default set of candidate number of repetitions.

5. The method according to claim 4, wherein a number of the values for the first indication information is greater than or equal to a number of the values in the set of candidate number of repetitions.

6. The method according to any one of claims 1 to 5, wherein the repeatedly transmitting a first physical uplink control channel, PUCCH, to a network device comprises:

repeatedly transmitting the first PUCCH to the network device in N time units,
wherein N represents a number of repetitions of transmission of the first PUCCH.

7. A wireless communication method (400), wherein the method (400) is applicable to a network device, and the method comprises:

repeatedly receiving (S410) a first physical uplink control channel, PUCCH, transmitted by a terminal device in an initial access phase or before a radio resource control, RRC, connection is established;
the method further comprises:

receiving a first request transmitted by the terminal device, wherein the first request is used to request a repetition of transmission of the first PUCCH,
wherein the receiving a first request transmitted by the terminal device comprises:
receiving a message 3, Msg3, transmitted by the terminal device, wherein the Msg3 comprises the first request.

8. The method according to claim 7, wherein the receiving a first request transmitted by the terminal device comprises: receiving the first request that is transmitted by the terminal device when a measurement result of a downlink reference signal is less than a first threshold.

9. The method according to claim 7 or 8, further comprising: transmitting first indication information to the terminal device, wherein the first indication information is used to indicate a number of repetitions of transmission of the first PUCCH.

10. A terminal device (800), comprising: a processor (810) and a memory (820), wherein the memory (820) is configured to store a computer program, and the processor (810) is configured to invoke and run the computer program stored in the memory (820) to cause the terminal device (800) to execute the method according to any one of claims 1 to 6.

11. A network device (800), comprising: a processor (810) and a memory (820), wherein the memory (820) is configured to store a computer program, and the processor (810) is configured to invoke and run the computer program stored in the memory (820) to cause the network device (800) to execute the method according to any one of claims 7 to 9.

**Patentansprüche**

1. Drahtloskommunikationsverfahren (200), wobei das Verfahren (200) auf eine Endgerätevorrichtung anwendbar ist und Folgendes umfasst:

wiederholtes Übertragen (S210) eines ersten physikalischen Uplink-Steuerkanals, PUCCH, an eine Netzwerkvorrichtung in einer anfänglichen Zugriffsphase oder vor der Herstellung einer Funkressourcensteuerungsverbindung, RRC-Verbindung;
wobei das Verfahren ferner Folgendes umfasst:

Übertragen einer ersten Anforderung an die Netzwerkvorrichtung, wobei die erste Anforderung verwendet wird, um eine Wiederholung der Übertragung des ersten PUCCH anzufordern,
wobei das Übertragen der ersten Anforderung an die Netzwerkvorrichtung Folgendes umfasst:
Übertragen einer Nachricht 3, Msg3, an die Netzwerkvorrichtung, wobei die Msg3 die erste Anforderung umfasst.

2. Verfahren nach Anspruch 1, wobei das Übertragen der ersten Anforderung an die Netzwerkvorrichtung Folgendes umfasst:
wenn ein Messergebnis eines Downlink-Referenzsignals der Endgerätevorrichtung unter einem Schwellenwert liegt, Übertragen der ersten Anforderung an die Netzwerkvorrichtung.

3. Verfahren nach Anspruch 1 oder 2, ferner umfassend:

Empfangen erster Anzeigeinformationen, die von der Netzwerkvorrichtung übertragen werden, wobei die ersten Anzeigeinformationen verwendet werden, um eine Anzahl von Wiederholungen der Übertragung des ersten PUCCH anzuzeigen.

4. Verfahren nach Anspruch 3, wobei die ersten Anzeigeinformationen verwendet werden, um die Anzahl von Wiederholungen der Übertragung des ersten PUCCH aus einem durch Systeminformationen konfigurierten Satz von Kandidatenanzahlen von Wiederholungen anzuzeigen, oder die ersten Anzeigeinformationen verwendet werden, um die Anzahl von Wiederholungen der Übertragungen des ersten PUCCH aus einem Standardsatz von Kandidatenanzahlen von Wiederholungen anzuzeigen.

5. Verfahren nach Anspruch 4, wobei eine Anzahl der Werte für die ersten Anzeigeinformationen größer oder gleich einer Anzahl der Werte in dem Satz von Kandidatenanzahlen von Wiederholungen ist.

6. Verfahren nach einem der Ansprüche 1 bis 5, wobei das wiederholte Übertragen eines ersten physikalischen Uplink-Steuerkanals, PUCCH, an eine Netzwerkvorrichtung Folgendes umfasst:

wiederholtes Übertragen des ersten PUCCH an die Netzwerkvorrichtung in N Zeiteinheiten,
wobei N eine Anzahl von Wiederholungen der Übertragung des ersten PUCCH darstellt.

7. Drahtloskommunikationsverfahren (400), wobei das Verfahren (400) auf eine Netzwerkvorrichtung anwendbar ist und das Verfahren Folgendes umfasst:

wiederholtes Empfangen (S410) eines ersten physikalischen Uplink-Steuerkanals, PUCCH, der von einer Endgerätevorrichtung in einer anfänglichen Zugriffsphase oder vor der Herstellung einer Funkressourcensteuerungsverbindung, RRC-Verbindung, übertragen wird;
wobei das Verfahren ferner Folgendes umfasst:

Empfangen einer ersten Anforderung, die von der Endgerätevorrichtung übertragen wird, wobei die erste Anforderung verwendet wird, um eine Wiederholung der Übertragung des ersten PUCCH anzufordern,
wobei das Empfangen der ersten Anforderung, die von der Endgerätevorrichtung übertragen wird, Folgendes umfasst:
Empfangen einer Nachricht 3, Msg3, die von der Endgerätevorrichtung übertragen wird, wobei die Msg3 die erste Anforderung umfasst.

8. Verfahren nach Anspruch 7, wobei das Empfangen der ersten Anforderung, die von der Endgerätevorrichtung übertragen wird, Folgendes umfasst:
Empfangen der ersten Anforderung, die von der Endgerätevorrichtung übertragen wird, wenn ein Messergebnis eines Downlink-Referenzsignals unter einem ersten Schwellenwert liegt.

9. Verfahren nach Anspruch 7 oder 8, ferner umfassend:
Übertragen erster Anzeigeinformationen an die Endgerätevorrichtung, wobei die ersten Anzeigeinformationen verwendet werden, um eine Anzahl von Wiederholungen der Übertragung des ersten PUCCH anzuzeigen.

10. Endgerätevorrichtung (800), umfassend: einen Prozessor (810) und einen Speicher (820), wobei der Speicher (820) zum Speichern eines Computerprogramms konfiguriert ist und der Prozessor (810) so konfiguriert ist, dass er das im Speicher (820) gespeicherte Computerprogramm aufruft und ausführt, um die Endgerätevorrichtung (800) zum Ausführen des Verfahrens nach einem der Ansprüche 1 bis 6 zu veranlassen.

11. Netzwerkvorrichtung (800), umfassend einen Prozessor (810) und einen Speicher (820), wobei der Speicher (820) zum Speichern eines Computerprogramms konfiguriert ist und der Prozessor (810) so konfiguriert ist, dass er das im Speicher (820) gespeicherte Computerprogramm aufruft und ausführt, um die Netzwerkvorrichtung (800) zum Ausführen des Verfahrens nach einem der Ansprüche 7 bis 9 zu veranlassen.

**Revendications**

1. Procédé de communication sans fil (200), le procédé (200) étant applicable à un dispositif terminal et comprenant l'étape consistant à :

transmettre répétitivement (S210) un premier canal de commande de liaison montante physique, PUCCH, à un dispositif de réseau dans une phase d'accès initiale ou avant l'établissement d'une connexion de commande de ressource radio, RRC ;

le procédé comprenant également l'étape consistant à :

transmettre une première demande au dispositif de réseau, la première demande étant utilisée pour demander une répétition de la transmission du premier PUCCH,

dans lequel la transmission d'une première demande au dispositif de réseau consiste à :

transmettre un message 3, Msg3, au dispositif de réseau, le Msg3 comprenant la première demande.

2. Procédé selon la revendication 1, dans lequel la transmission d'une première demande au dispositif de réseau consiste à :

lorsqu'un résultat de mesure d'un signal de référence de liaison descendante du dispositif terminal est inférieur à un premier seuil, transmettre la première demande au dispositif de réseau.

3. Procédé selon la revendication 1 ou 2, comprenant également l'étape consistant à :

recevoir une première information d'indication transmise par le dispositif de réseau, la première information d'indication étant utilisée pour indiquer un nombre de répétitions de la transmission du premier PUCCH.

4. Procédé selon la revendication 3, dans lequel la première information d'indication est utilisée pour indiquer un nombre de répétitions de la transmission du premier PUCCH à partir d'un ensemble de nombres de répétitions candidats configuré par une information système, ou la première information d'indication est utilisé pour indiquer le nombre de répétitions de la transmission du premier PUCCH à partir d'un ensemble par défaut de nombres de répétitions candidats.

5. Procédé selon la revendication 4, dans lequel un nombre de valeurs concernant la première information d'indication est supérieur ou égal à un nombre de valeurs de l'ensemble de nombres de répétitions candidats.

6. Procédé selon l'une quelconque des revendications 1 à 5, dans lequel la transmission répétitive d'un premier canal de commande de liaison montante physique, PUCCH, à un dispositif de réseau consiste à :

transmettre répétitivement le premier PUCCH au dispositif de réseau dans N unités de temps, où N représente un nombre de répétitions de la transmission du premier PUCCH.

7. Procédé de communication sans fil (400), le procédé (400) étant applicable à un dispositif de réseau, et le procédé comprenant l'étape consistant à :

recevoir répétitivement (S410) un premier canal de commande de liaison montante physique, PUCCH, transmis par un dispositif terminal dans une phase d'accès initiale ou avant l'établissement d'une connexion de commande de ressource radio, RRC ;

le procédé comprenant également l'étape consistant à :

recevoir une première demande transmise par le dispositif terminal, la première demande étant utilisée pour demander une répétition de la transmission du premier PUCCH,

dans lequel la réception d'une première demande transmise par le dispositif terminal consiste à :

recevoir un message 3, Msg3, transmis par le dispositif terminal, le Msg3 comprenant la première demande.

8. Procédé selon la revendication 7, dans lequel la réception d'une première demande transmise par le dispositif terminal consiste à :

recevoir la première demande qui est transmise par le dispositif terminal lorsqu'un résultat de mesure d'un signal de référence de liaison descendante est inférieur à un premier seuil.

9. Procédé selon la revendication 7 ou 8, comprenant également l'étape consistant à :

transmettre une première information d'indication transmise au dispositif terminal, la première information d'indication étant utilisée pour indiquer un nombre de répétitions de la transmission du premier PUCCH.

10. Dispositif terminal (800), comprenant : un processeur (810) et une mémoire (820), la mémoire (820) étant configurée pour stocker un programme informatique, et le processeur (810) étant configuré pour appeler et exécuter le programme informatique stocké dans la mémoire (820) afin d'amener le dispositif terminal (800) à exécuter le procédé selon l'une quelconque des revendications 1 à 6.

11. Dispositif de réseau (800), comprenant : un processeur (810) et une mémoire (820), la mémoire (820) étant configurée pour stocker un programme informatique, et le processeur (810) étant configuré pour appeler et exécuter le programme informatique stocké dans la mémoire (820) afin d'amener le dispositif de réseau (800) à exécuter le procédé selon l'une quelconque des revendications 7 à 9.

100

130

110

120

110

FIG. 1

1102

1101

FIG. 2

1202

1201

1203

FIG. 3

Satellite

Feeder link

Data
network

Service
link

Gateway

FIG. 4

Satellite Inter-satellite link

Feeder link

Service link

Feeder link

Gateway

Data network

FIG. 5

| Terminal device | | Network device |
|---|---|---|

Contention-based random access procedure

Step 1: random access preamble (Msg 1)

Step 2: random access response (Msg 2)

Step 3: scheduled transmission (Msg 3)

Step 4: contention resolution (Msg 4)

FIG. 6

200

Repeatedly transmit a first physical uplink control channel PUCCH to a network device in an initial access phase

S210

FIG. 7

Repetition of PUCCH
transmission

First nominal
TDW

First nominal
TDW

Time unit

FIG. 8

Repetition of PUCCH
transmission

First nominal
TDW

Index of a start
PRB of the
second hop

First nominal
TDW

Index of a start
PRB of the first
hop

Time unit

FIG. 9

Repetition of PUCCH
transmission

First nominal
TDW

First nominal
TDW

Index of a start
PRB of the
second hop

Index of a start
PRB of the
first hop

Time unit

FIG. 10

300

Maintain power consistency of a message 3 physical uplink shared channel Msg3 PUSCH and phase continuity of the Msg3 PUSCH during each second TDW of at least one second nominal time window TDW

S310

FIG. 11

Repetition of Msg3 PUSCH transmission

Second nominal TDW | Second nominal TDW | Second nominal TDW | Second nominal TDW

☐ Time unit

FIG. 12

Repetition of Msg3 PUSCH transmission

Index of a start PRB of the second hop

Second nominal TDW | Second nominal TDW

Index of a start PRB of the first hop

Second nominal TDW | Second nominal TDW

☐ Time unit

FIG. 13

Repetition of Msg3
PUSCH transmission

Second nominal
TDW

Second nominal
TDW

Index of a
start PRB of
the second
hop

Index of a
start PRB of
the first hop

Time unit

FIG. 14

400

| Repeatedly receive a first physical uplink control channel PUCCH from a network device in an initial access phase | S410 |

FIG. 15

500

| Perform joint channel estimation for a message 3 physical uplink shared channel Msg3 PUSCH based on a demodulation reference signal DMRS in each second nominal TDW of at least one second nominal time window TDW | S510 |

FIG. 16

610

| Terminal device |
| Transmitting unit | 611 |

620

| Terminal device |
| Maintaining unit | 621 |

FIG. 17          FIG. 18

710

Network device

711

Receiving unit

FIG. 19

720

Network device

721

Estimation unit

FIG. 20

800

Communications device

820 Memory | Processor 810

Transceiver 830

FIG. 21

900

Chip

930

Processor 910

Memory 920

940

FIG. 22

**EP 4 503 486 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2019045552 A1